# EUROPEAN PATENT APPLICATION

(11) **EP 4 660 801 A1**
(43) Date of publication of application: **10.12.2025**
(21) Application number: 24759480.7
(22) Date of filing: 25.01.2024
(51) Int. Cl.: G06F 9/48, H04L 67/563

(54) **APPLICATION CONTEXT RELOCATION METHOD, COMMUNICATION METHOD, RELATED APPARATUS, AND SYSTEM**

(30) Priority: 20.02.2023 CN 202310193234
(71) Applicant: Huawei Technologies Co., Ltd., Shenzhen, Guangdong 518129 (CN)
(72) Inventor: HU, Yajie, Shenzhen, Guangdong 518129 (CN); YANG, Yanmei, Shenzhen, Guangdong 518129 (CN); LI, Yongcui, Shenzhen, Guangdong 518129 (CN)
(74) Representative: Pfenning, Meinig & Partner mbB
(86) International application number: PCT/CN2024/074052
(87) International publication number: WO 2024/174803

(57) **Abstract**

This application provides an application context relocation ACR method, a communication method, and a related apparatus and system, to relocate an application context between application instances EASs. The ACR method includes: determining a target edge enabler server EES, where the target EES is an EES that supports a first ACR scenario, and the first ACR scenario is a scenario in which the target EES executes ACR; and requesting the target EES to execute ACR. In the ACR method, the target EES that supports the first ACR scenario is determined and the target EES is requested to execute ACR, so that ACR can be completed via the target EES.

## Description

This application claims priority to Chinese Patent Application No. 202310193234.1, filed with the China National Intellectual Property Administration on February 20, 2023 and entitled "APPLICATION CONTEXT RELOCATION METHOD, COMMUNICATION METHOD, AND RELATED APPARATUS AND SYSTEM", which is incorporated herein by reference in its entirety.

### TECHNICAL FIELD

This application relates to the field of communication technologies, and in particular, to an application context relocation method, a communication method, and a related apparatus and system.

### BACKGROUND

In an edge computing scenario, a same application is usually deployed in a plurality of edge data networks (edge data networks, EDNs). Application instances (edge application servers, EASs) of the same application deployed in different EDNs may provide a same service. After accessing a network, a terminal device selects an EAS nearby to obtain an application service. When a location of the terminal device changes, when a user plane path is updated, or when a current EDN cannot provide a service, the terminal device needs to reselect a new EAS to continue to execute a service. The EAS reselected by the terminal device may be referred to as a target EAS, and the EAS connected to the terminal device before the terminal device is handed over to the target EAS may be referred to as a source EAS.

When the service of the terminal device is switched from the source EAS to the target EAS, to ensure continuity of the application service, an application context in the source EAS needs to be relocated to the target EAS. How to relocate the application context is an urgent problem to be resolved.

### SUMMARY

This application provides an application context relocation method, a communication method, and a related apparatus and system, to relocate an application context between EASs.

According to a first aspect, this application provides an application context relocation (application context relocation, ACR) method. The method may be applied to a terminal device, and may be performed by the terminal device, or may be performed by a component (for example, a chip, a chip system, or a processor) configured in the terminal device, or may be implemented by a logical module or software that can implement all or some functions of the terminal device. This is not limited in this application.

The method includes: determining a target edge enabler server (edge enabler server, EES), where the target EES is an EES that supports a first ACR scenario, and the first ACR scenario is a scenario in which the target EES executes ACR; and requesting the target EES to execute ACR.

The ACR is a process of relocating an application context from a source EAS to a target EAS. In this application, the source EAS is an EAS that currently provides an application service for an application of the terminal device, that is, an EAS currently connected to the terminal device. A source EES is an EES associated with the source EAS. The source EAS registers with the source EES, and the source EES manages the source EAS. The target EAS is an EAS that provides an application service for the application of the terminal device after the ACR. The target EES is an EES associated with the target EAS. The target EAS registers with the target EES, and the target EES manages the target EAS. In the ACR process, the target EES needs to be first discovered, and then the target EAS needs to be discovered via the target EES, so that ACR is executed.

The first ACR scenario is the scenario in which the target EES executes ACR. An ACR scenario includes phases such as ACR detection, ACR decision, ACR execution, and post-ACR clean up. In the first ACR scenario, the terminal device performs the ACR detection and the ACR decision, the target EES performs the ACR execution, and the target EES and the target EAS perform the post-ACR clean up.

That the target EES performs the ACR execution includes at least one of the following content: The target EES modifies a user plane path, the target EES discovers the target EAS via the target EES, and the target EES triggers the target EAS to perform application context transfer.

In this application, the determined target EES is the EES that supports the first ACR scenario. In other words, the EES can execute ACR as the target EES. In this way, after the target EES is requested to execute ACR, the target EES can execute ACR.

Based on the technical solution, the determined target EES supports the ACR execution as the target EES, so that when the EAS currently connected to the terminal device cannot continue to provide the application service, application context relocation can be smoothly completed via the target EES. In this way, smooth switching between EASs can be ensured, and stability and continuity of the application service can be ensured.

With reference to the first aspect, in some possible implementations of the first aspect, the determining a target EES includes: receiving EES information from an edge configuration server (edge configuration server, ECS), where the EES information indicates at least one EES; and determining the target EES based on the EES information.

The ECS is responsible for EDN configuration. Related information of an EES may register with or be configured on the ECS. The ECS may provide EES information for the terminal device, to indicate an EES that register with or is configured on the ECS. The terminal device may determine the target EES based on the EES information from the ECS.

Optionally, the method further includes: The terminal device receives first information from the ECS. The first information indicates an ACR capability of the at least one EES.

An ACR capability of an EES includes at least one of the following information: whether the EES supports the ACR, an ACR scenario supported by the EES, an ACR application programming interface (application programming interface, API) supported by the EES, and the like.

The ECS may send EES information to the terminal device, to indicate at least one EES. The ECS may further send information to the terminal device, to indicate ACR capabilities of the EESs. Correspondingly, the terminal device can obtain the ACR capabilities of the EESs.

In this way, the terminal device can select, based on the ACR capabilities of the EESs, an EES that supports the first ACR scenario, and use the EES as the target EES.

In some embodiments, the EES indicated by the EES information from the ECS is an EES that supports the first ACR scenario. That is, the ECS may select an EES that supports the first ACR scenario from the EES that registers with or is configured on the ECS, and send related information of the EES to the terminal device.

Therefore, when selecting the target EES from the EES indicated by the EES information, the terminal device does not need to perform further selection based on the ACR scenario supported by the EES, and load of the terminal device can be reduced.

Optionally, the method further includes: The terminal device sends second information to the ECS. The second information indicates at least one of the following: the target EES that supports the first ACR scenario is to be selected; a currently connected EES or a currently connected EAS cannot execute ACR; a current application has no corresponding ACR scenario; or an ACR capability of an EES is requested to be obtained.

Before the ECS sends the EES information or the first information to the terminal device, the terminal device may send the second information to the ECS. In other words, the ECS may select, based on the second information, an EES that supports the first ACR scenario and indicate the EES to the terminal device, or send information to the terminal device, to indicate at least one EES and an ACR capability of the at least one EES.

Based on the technical solution, the ECS may select, based on ACR capabilities of EESs, EESs that support the first ACR scenario, and indicate the EESs to the terminal device, so that the terminal device may determine an EES from the EESs as the target EES, and does not need to perform selection based on the ACR capabilities of the EESs. Therefore, a quantity of tasks of the terminal device is reduced, and load of the terminal device can be reduced. The ECS may alternatively indicate EESs and ACR capabilities of the EESs to the terminal device, and the terminal device selects an EES that supports the first ACR scenario as the target EES. Therefore, the ECS does not need to perform selection based on the ACR capabilities of the EESs, so that a quantity of tasks of the ECS is reduced, and load of the ECS can be reduced. The target EES determined by the terminal device supports the first ACR scenario, so that when requesting the target EES to execute ACR, the terminal device can smoothly execute ACR. Therefore, switching between EASs can be smoothly completed, and continuity of an application service can be ensured.

With reference to the first aspect, in some possible implementations of the first aspect, the method further includes: when a current application has no corresponding ACR scenario, or when a currently connected EES or a currently connected EAS cannot execute ACR, determining to execute ACR based on the first ACR scenario.

When the current application has no corresponding ACR scenario, or when the currently connected EES or the currently connected EAS cannot execute ACR, application context relocation cannot be implemented. In this case, the terminal device may determine to execute ACR based on the first ACR scenario, that is, execute ACR via the target EES. After determining to execute ACR based on the first ACR scenario, the terminal device may select the target EES and request the target EES to execute ACR.

It should be understood that when the current application has a corresponding ACR scenario, or when the currently connected EES or the currently connected EAS can execute ACR, the terminal device may also determine to execute ACR based on the first ACR scenario.

Optionally, the method further includes: The terminal device receives third information from the currently connected EES. The third information indicates that the current application has no corresponding ACR scenario, or indicates that the currently connected EES or the currently connected EAS cannot execute ACR.

The terminal device may determine, by using information from an EES, that the current application has no corresponding ACR scenario, or determine that the currently connected EES or the currently connected EAS cannot execute ACR.

With reference to the first aspect, in some possible implementations of the first aspect, before the determining a target EES, the method further includes: receiving fourth information from a currently connected EES, where the fourth information indicates to select the target EES that supports the first ACR scenario, or indicates that the first ACR scenario is an ACR scenario corresponding to a current application.

The currently connected EES may determine that ACR needs to be executed based on the first ACR scenario, and indicate, to the terminal device, that the ACR scenario corresponding to the current application is the first ACR scenario, or may indicate, to the terminal device, that the target EES needs to support the first ACR scenario when the target EES is determined.

With reference to the first aspect, in some possible implementations of the first aspect, the method further includes: receiving EAS information from the target EES, where the EAS information indicates at least one EAS; and determining a target EAS based on the EAS information.

The target EES may send the EAS information to the terminal device, to indicate the at least one EAS, and the terminal device may determine the target EAS from the at least one EAS. An application service may be switched from the currently connected EAS to the target EAS, and the ACR may be executed based on the target EAS.

Optionally, the method further includes: The terminal device receives fifth information from the target EAS. The fifth information indicates an ACR capability of the at least one EAS.

The ACR capability of the EAS includes whether the EAS supports the ACR, an ACR scenario supported by the EAS, an ACR API supported by the EAS, and the like.

The target EES may send information to the terminal device, to indicate an ACR capability of an EAS. Correspondingly, the terminal device may obtain the ACR capability of the at least one EAS indicated by the target EES, so that the terminal device can determine, based on the ACR capability of the EAS, an EAS that supports the first ACR scenario, and use the EAS as the target EAS.

In some embodiments, the at least one EAS supports the first ACR scenario.

The target EES may select EASs that support the first ACR scenario, and indicate the EASs to the terminal device by using the EAS information sent to the terminal device. In this way, the terminal device may select any EAS from the EASs as the target EAS.

Optionally, the method further includes: The terminal device sends sixth information to the target EES. The sixth information indicates at least one of the following: the target EAS that supports the first ACR scenario is to be selected; a source EES or the source EAS cannot execute ACR; the current application has no corresponding ACR scenario; or an ACR capability of an EAS is requested to be obtained.

Before the target EES sends the EAS information or the fifth information to the terminal device, the terminal device may send the sixth information to the target EES. In other words, the target EES may send the EAS information to the terminal device and/or send the fifth information to the terminal device based on the sixth information.

Based on the technical solution, the target EES may select, based on ACR capabilities of EASs, EASs that support the first ACR scenario, and indicate the EASs to the terminal device, so that the terminal device may determine an EAS from the EASs as the target EAS, and does not need to perform selection based on the ACR capabilities of the EASs. Therefore, a quantity of tasks of the terminal device is reduced, and load of the terminal device can be reduced. The target EES may alternatively indicate EASs and ACR capabilities of the EASs to the terminal device, and the terminal device selects an EAS that supports the first ACR scenario as the target EAS. Therefore, the target EES does not need to perform selection based on the ACR capabilities of the EASs, so that a quantity of tasks of the target EES is reduced, and load of the target EES can be reduced.

Both the target EES and the target EAS that are determined by the terminal device support the first ACR scenario. When the terminal device requests the target EES to execute ACR, the target EES and the target EAS can execute ACR, so that application context relocation can be smoothly completed, and continuity of the application service can be ensured.

According to a second aspect, this application provides a communication method. The method may be applied to an ECS, and may be performed by the ECS, or may be performed by a component (for example, a chip, a chip system, or a processor) configured in the ECS, or may be implemented by a logical module or software that can implement all or some functions of the ECS. This is not limited in this application.

The method includes: sending EES information to a terminal device, where the EES information indicates at least one EES; and sending first information to the terminal device, where the first information indicates an ACR capability of the at least one EES.

The ECS may send the EES information and the first information to the terminal device, to indicate the at least one EES and the ACR capability of the at least one EES. In this way, the terminal device can determine, based on the ACR capability of the EES, a target EES that supports a first ACR scenario.

Optionally, the method further includes: receiving second information from the terminal device, where the second information indicates to request to obtain an ACR capability of an EES.

The ECS may send the EES information and the first information to the terminal device based on the second information from the terminal device.

According to a third aspect, this application provides a communication method. The method may be applied to the ECS in the second aspect. The method includes: determining at least one EES that supports a first ACR scenario, where the first ACR scenario is a scenario in which a target EES executes ACR; and sending EES information to a terminal device, where the EES information indicates the at least one EES.

After determining the at least one EES that supports the first ACR scenario, the ECS may indicate the at least one EES to the terminal device. In this way, the terminal device may select any EES from the at least one EES as the target EES.

Optionally, the method further includes: receiving second information from the terminal device, where the second information indicates at least one of the following: the target EES that supports a ACR scenario is to be selected; a currently connected EES or a currently connected EAS cannot execute ACR; or a current application has no corresponding ACR scenario.

The ECS may determine, based on the second information from the terminal device, the at least one EES that supports the first ACR scenario, and indicate the at least one EES to the terminal device.

According to a fourth aspect, this application provides a communication method. The method may be applied to an EES, and may be performed by the EES, or may be performed by a component (for example, a chip, a chip system, or a processor) configured in the EES, or may be implemented by a logical module or software that can implement all or some functions of the EES. This is not limited in this application.

The method includes: determining that a current application has no corresponding ACR scenario; and sending third information to a terminal device, where the third information indicates that the current application has no corresponding ACR scenario, or indicates that the EES or a currently connected EAS cannot execute ACR.

When the current application has no corresponding ACR scenario, the EES may indicate, to the terminal device, that the current application has no corresponding ACR scenario.

According to a fifth aspect, this application provides a communication method. The method may be applied to the EES in the fourth aspect. The method includes: determining to execute ACR based on a first ACR scenario, where the first ACR scenario is a scenario in which a target EES executes ACR; and sending fourth information to a terminal device, where the fourth information indicates to select the target EES that supports the first ACR scenario, or indicates that the first ACR scenario is an ACR scenario corresponding to a current application.

Optionally, before the determining to execute ACR based on a first ACR scenario, the method further includes: determining that the current application has no corresponding ACR scenario.

The EES may determine to execute ACR based on the first ACR scenario, and indicate, to the terminal device, that the first ACR scenario is the ACR scenario corresponding to the current application, that is, ACR needs to be executed based on the first ACR scenario when switching between EASs is performed.

When the current application has no corresponding ACR scenario, the EES may determine to execute ACR based on the first ACR scenario, or may determine, in another case, to execute ACR based on the first ACR scenario. For example, when both an EES and an EAS that are currently connected to the terminal device support the ACR, the EES may alternatively determine to execute ACR based on the first ACR scenario.

According to a sixth aspect, this application provides a communication method. The method may be applied to the EES in the fourth aspect, and the method includes: sending EAS information to a terminal device, where the EAS information indicates at least one EAS; and sending fifth information to the terminal device, where the fifth information indicates an ACR capability of the at least one EAS.

The EES may send the EAS information and the fifth information to the terminal device, to indicate the at least one EAS and the ACR capability of the at least one EAS. In this way, the terminal device can determine, based on the ACR capability of the EAS, a target EAS that supports a first ACR scenario.

Optionally, the method further includes: receiving sixth information from the terminal device, where the sixth information indicates to request to obtain the ACR capability of the EAS.

The EES may send the EAS information and the fifth information to the terminal device based on the sixth information from the terminal device.

According to a seventh aspect, this application provides a communication method. The method may be applied to the EES in the fourth aspect. The method includes: determining at least one EAS that supports a first ACR scenario, where the first ACR scenario is a scenario in which a target EES executes ACR; and sending EAS information to a terminal device, where the EAS information indicates the at least one EAS.

After determining the at least one EAS that supports the first ACR scenario, the EES may indicate the at least one EAS to the terminal device. In this way, the terminal device may select any EAS from the at least one EAS as a target EAS.

Optionally, the method further includes: receiving sixth information from the terminal device, where the sixth information indicates at least one of the following: a target EAS that supports the first ACR scenario is to be selected; a source EES and a source EAS cannot execute ACR; or a current application has no corresponding ACR scenario.

The EES may determine, based on the sixth information from the terminal device, the at least one EAS that supports the first ACR scenario, and indicate the at least one EAS information to the terminal device.

According to an eighth aspect, this application provides an EEC context transfer method. The method may be applied to the terminal device in the first aspect. The method includes: obtaining an EEC context transfer capability of a source EES; and determining a target EES, where the target EES is determined based on the EEC context transfer capability of the source EES.

An EEC context transfer capability includes whether an EES supports EEC context transfer and a supported EEC context transfer procedure.

Before switching between EASs is performed, the target EES needs to be first determined. The terminal device may determine the target EES depending on whether the source EES supports EEC context transfer and based on an EEC context transfer procedure supported by the source EES.

In this way, the terminal device may determine the target EES that supports an EEC context transfer capability corresponding to that supported by the source EES, so that the EEC context transfer can be performed between the source EES and the target EES. The target EES can obtain an EEC context, and the target EES can provide, for the terminal device based on the EEC context, information that can be used in an edge computing service, so that an application service of the terminal device is normally executed.

Optionally, the obtaining an EEC context transfer capability of a source EES includes: receiving first capability information from the source EES, where the first capability information indicates the EEC context transfer capability of the source EES.

The terminal device may determine, based on the information obtained from the source EES, whether the source EES supports the EEC context transfer. If the source EES supports the EEC context transfer, the EEC context transfer procedure supported by the source EES may be further determined.

The EEC context transfer procedure may include an EEC context pull procedure and/or an EEC context push procedure.

With reference to the eighth aspect, in some possible implementations of the eighth aspect, the source EES supports the EEC context transfer. The determining a target EES based on the EEC context transfer capability of the source EES includes: receiving EES information from an ECS, where the EES information indicates at least one EES; receiving second capability information from the ECS, where the second capability information indicates an EEC context transfer capability of the at least one EES; and determining the target EES from the at least one EES.

When the source EES supports the EEC context transfer, the terminal device may select, from the at least one EES indicated by the ECS, an EES that supports an EEC context transfer procedure corresponding to that supported by the source EES as the target EES.

In this way, the EEC context transfer can be smoothly performed between the source EES and the target EES, and the target EES can successfully obtain the EEC context, to provide, for the terminal device, the information that can be used in the edge computing service, so that the application service of the terminal device is normally executed.

Optionally, before the receiving EES information from an ECS, the method further includes: sending first request information to the ECS, where the first request information indicates at least one of the following: the source EES supports the EEC context transfer; or an EEC context transfer capability of an EES is requested to be obtained.

After receiving the first request information from the terminal device, the ECS may send the second capability information to the terminal device.

Optionally, the target EES and the source EES do not support the corresponding EEC context transfer procedure. The terminal device may select, from the at least one EES, an EES that does not support the EEC context transfer procedure corresponding to that supported by the source EES as the target EES.

Optionally, the method further includes: determining that re-registration with the target EES is needed.

When the target EES and the source EES do not support the corresponding EEC context transfer procedure, the terminal device may determine that the terminal device needs to re-register with the target EES. Therefore, when the target EES and the source EES cannot perform EEC context transfer, the target EES can also obtain information about an EEC from the terminal device, and generate the EEC context based on the information about the EEC.

With reference to the eighth aspect, in some possible implementations of the eighth aspect, the source EES supports the EEC context transfer; and the determining a target EES based on the EEC context transfer capability of the source EES includes: sending third capability information to an ECS, where the third capability information indicates an EEC context transfer procedure supported by the source EES; receiving EES information from the ECS, where the EES information indicates at least one EES; and determining the target EES from the at least one EES.

The ECS may determine, based on the third capability information from the terminal device, the EEC context transfer procedure supported by the source EES, so that the ECS may select at least one EES based on the EEC context transfer procedure supported by the source EES, and send the EES information to the terminal device to indicate the at least one EES, so that the terminal device may determine the target EES from the at least one EES.

The at least one EES selected by the ECS may be an EES that supports an EEC context transfer capability corresponding to that supported by the source EES, or may be an EES that does not support the EEC context transfer capability corresponding to that supported by the source EES.

For example, when an EES that supports the EEC context transfer capability corresponding to that supported by the source EES exists in EESs managed by the ECS, the ECS may select at least one EES from the EESs. When no EES that supports the EEC context transfer capability corresponding to that supported by the source EES exists in the EESs managed by the ECS, the ECS may select at least one EES that does not support the EEC context transfer capability corresponding to that supported by the source EES.

Optionally, the method further includes: receiving registration indication information from the ECS.

When the EES selected by the ECS does not support the EEC context transfer procedure corresponding to that supported by the source EES, the ECS may send registration indication information to the terminal device, to indicate that the terminal device needs to reregister with the target EES. The terminal device may determine, based on the registration indication information, that the terminal device needs to reregister with the target EES.

When the EES selected by the ECS supports the EEC context transfer procedure corresponding to that supported by the source EES, the ECS may send registration indication information to the terminal device, to indicate that the terminal device does not need to reregister with the target EES. The terminal device may determine, based on the registration indication information, that the terminal device does not need to reregister with the target EES.

In this way, when the target EES and the source EES cannot perform EEC context transfer, the target EES may obtain information about an EEC from the terminal device by using an EEC registration procedure, to generate the EEC context. When the target EES and the source EES can perform EEC context transfer, the terminal device does not need to register with the target EEC, so that redundant operations can be avoided.

In the solution, the step of selecting, from EESs, an EES having an EEC context transfer capability corresponding to that of the source EES may be performed by the ECS. In this way, when determining the target EES, the terminal device does not need to perform selection based on EEC context transfer capabilities of the EESs, so that load of the terminal device can be reduced.

With reference to the eighth aspect, in some possible implementations of the eighth aspect, the source EES supports the EEC context transfer; and after the determining a target EES, the method further includes: sending fourth capability information to the target EES, where the fourth capability information indicates the EEC context transfer capability of the source EES; and receiving registration indication information from the target EES, where the registration indication information indicates whether reregistration with the target EES is needed.

When the source EES supports the EEC context transfer, the terminal device may send information to the target EES, to indicate that the source EES supports the EEC context transfer procedure. After receiving the fourth capability information, the target EES may determine whether the target EES supports an EEC context transfer capability corresponding to that supported by the source EES.

When the target EES supports the EEC context transfer capability corresponding to that supported by the source EES, the target EES may send registration indication information to the terminal device, to indicate that the terminal device does not need to reregister with the target EES.

When the target EES does not support the EEC context transfer capability corresponding to that supported by the source EES, the target EES may send registration indication information to the terminal device, to indicate that the terminal device needs to reregister with the target EES.

In this way, when the target EES and the source EES cannot perform EEC context transfer, the target EES may indicate the terminal device to reregister with the target EES, so that the target EES can obtain the information about the EEC, generate the EEC context, and provide, for the terminal device, the information that can be used in the edge computing service, so that the application service of the terminal device is normally executed. When the target EES and the source EES can perform EEC context transfer, the target EES may indicate the terminal device not to register with the target EEC, so that redundant operations can be avoided.

With reference to the eighth aspect, in some possible implementations of the eighth aspect, after the determining a target EES, the method further includes: receiving fifth capability information from the target EES, where the fifth capability information indicates an EEC context transfer capability of the target EES; and determining, based on the EEC context transfer capability of the target EES, whether reregistration is needed.

The target EES may indicate the EEC context transfer capability of the target EES to the terminal device, so that the terminal device may determine whether the target EES and the source EES support the corresponding EEC context transfer capability.

When the source EES supports the EEC context transfer, and the target EES and the source EES support the corresponding EEC context transfer capability, the terminal device may determine that the terminal device does not need to reregister with the target EES.

When the target EES and the source EES do not support the corresponding EEC context transfer capability, or the source EES does not support the EEC context transfer, the terminal device may determine that the terminal device needs to reregister with the target EES.

Optionally, the method further includes: sending second request information to the target EES, where the second request information indicates to request to obtain an EEC context transfer capability of an EES.

After receiving the second request information from the terminal device, the target EES may send the fifth capability information to the terminal device.

In the solution, the step of determining whether the target EES and the source EES support the corresponding EEC context transfer capability may be performed by the terminal device, and the terminal device further determines whether the terminal device needs to reregister with the target EES. In this way, the target EES does not need to perform determining, and load of the target EES can be reduced.

According to a ninth aspect, this application provides a communication apparatus. The communication apparatus may implement the method performed by the terminal device in the foregoing aspects, may implement the method performed by the ECS in the foregoing aspects, or may implement the method performed by the EES in the foregoing aspects. The apparatus includes a corresponding unit or module configured to perform the method. The unit or module included in the apparatus can be implemented by software and/or hardware.

According to a tenth aspect, this application provides a communication apparatus, including a processor. The processor may implement the method performed by the terminal device in the foregoing aspects, may implement the method performed by the ECS in the foregoing aspects, or may implement the method performed by the EES in the foregoing aspects.

Optionally, the apparatus may further include a memory, configured to store instructions and data. The memory is coupled to the processor. When the processor executes the instructions stored in the memory, the method described in the foregoing aspects may be implemented.

Optionally, the apparatus may further include a communication interface. The communication interface is used by the apparatus to communicate with another device. For example, the communication interface may be a transceiver, a circuit, a bus, a module, or another type of communication interface.

According to an eleventh aspect, this application provides a communication system, including at least one of a source EES and a target EES. The source EES is configured to implement the method performed by the EES in the fourth aspect or the fifth aspect, and the target EES is configured to implement the method performed by the EES in the sixth aspect or the seventh aspect.

Optionally, the communication system further includes an ECS. The ECS is configured to implement the method performed by the ECS in the foregoing aspects.

Optionally, the communication system further includes a terminal device. The terminal device is configured to implement the method performed by the terminal device in the foregoing aspects.

According to a twelfth aspect, this application provides a chip system. The chip system includes at least one processor, configured to support implementation of functions related to the method performed by the terminal device in the foregoing aspects, configured to support implementation of functions related to the method performed by the ECS in the foregoing aspects, or configured to support implementation of functions related to the method performed by the EES in the foregoing aspects, for example, receive or process data and/or information in the foregoing method.

In a possible design, the chip system further includes a memory. The memory is configured to store program instructions and data, and the memory is located inside or outside the processor.

The chip system may include a chip, or may include a chip and another discrete component.

According to a thirteenth aspect, this application provides a computer-readable storage medium, including a computer program. When the computer program is run, the method performed by the terminal device in the foregoing aspects is implemented, the method performed by the ECS in the foregoing aspects is implemented, or the method performed by the EES in the foregoing aspects is implemented.

According to a fourteenth aspect, this application provides a computer program product. The computer program product includes a computer program (which may also be referred to as code or instructions). When the computer program is run, the method performed by the terminal device in the foregoing aspects is implemented, the method performed by the ECS in the foregoing aspects is implemented, or the method performed by the EES in the foregoing aspects is implemented.

It should be understood that, the technical solutions of the second aspect to the fourteenth aspect of this application correspond to the technical solution of the first aspect of this application, and beneficial effects obtained by each aspect and corresponding feasible implementations are similar and are not described in detail again.

### BRIEF DESCRIPTION OF DRAWINGS

FIG. 1 shows a possible architecture of a communication system applicable to an application context relocation method according to an embodiment of this application;
FIG. 2 is a diagram of a scenario applicable to an ACR method according to an embodiment of this application;
FIG. 3 is a schematic flowchart of an ACR method according to an embodiment of this application;
FIG. 4 is a schematic flowchart of a method for determining a target EES by an EEC according to an embodiment of this application;
FIG. 5 is a diagram of a procedure in which an EAS separately registers with an EES and an ECS;
FIG. 6 is a diagram of a procedure in which an EEC requests a target EES to execute ACR according to an embodiment of this application;
FIG. 7 is a diagram of a method for determining a target EAS by an EEC according to an embodiment of this application;
FIG. 8 shows a possible implementation of an application context relocation method according to an embodiment of this application;
FIG. 9 shows another possible implementation of an application context relocation method according to an embodiment of this application;
FIG. 10 shows another possible implementation of an application context relocation method according to an embodiment of this application;
FIG. 11 shows another possible implementation of an application context relocation method according to an embodiment of this application;
FIG. 12 is a diagram of an EEC registration procedure according to an embodiment of this application;
FIG. 13 is a diagram of an EEC context pull procedure and an EEC context push procedure according to an embodiment of this application;
FIG. 14 is a schematic flowchart of an EEC context transfer method according to an embodiment of this application;
FIG. 15 is a schematic flowchart of a method for determining a target EES according to an embodiment of this application;
FIG. 16 is a schematic flowchart of a method for determining whether to perform EEC context transfer according to an embodiment of this application;
FIG. 17 shows a possible implementation of an EEC context relocation method according to an embodiment of this application;
FIG. 18 shows another possible implementation of an EEC context relocation method according to an embodiment of this application;
FIG. 19 is a block diagram of a communication apparatus according to an embodiment of this application; and
FIG. 20 is another block diagram of a communication apparatus according to an embodiment of this application.

### DESCRIPTION OF EMBODIMENTS

The following describes technical solutions of this application with reference to accompanying drawings.

The technical solutions provided in embodiments of this application may be applied to various communication systems, for example, a 5th generation (5th generation, 5G) mobile communication system, a new radio access technology (new radio access technology, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), or a worldwide interoperability for microwave access (worldwide interoperability for microwave access, WiMAX) communication system. The mobile communication system may include non-standalone (non-standalone, NSA) networking and/or standalone (standalone, SA) networking. The technical solutions provided in this application may be further applied to a future communication system, for example, a sixth generation mobile communication system. This is not limited in this application.

The technical solutions provided in this application may be further applied to machine type communication (machine type communication, MTC), long term evolution-machine (Long Term Evolution-machine, LTE-M), and a device-to-device (device-to-device, D2D) network, a machine to machine (machine to machine, M2M) network, an internet of things (internet of things, IoT) network, or other networks. The IoT network may include, for example, an internet of vehicles. Communication manners in an internet of vehicles system are collectively referred to as a vehicle to X device (vehicle to X, V2X, where X may stand for anything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

The technical solutions in this application may be applied to various communication scenarios, for example, a service continuity scenario and a multi-access edge computing (multi-access edge computing, MEC) scenario. This is not limited in this application.

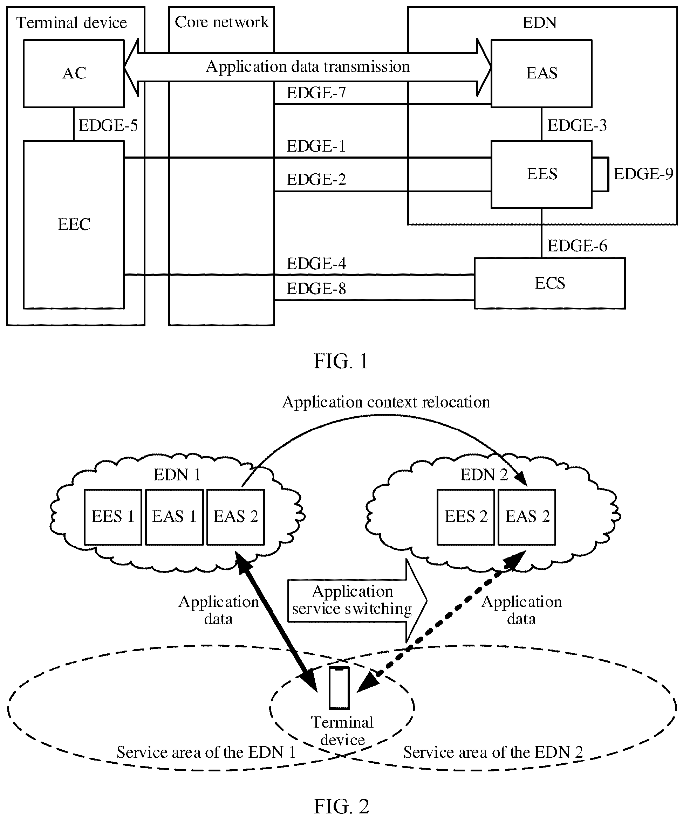

FIG. 1 shows a possible architecture of a communication system applicable to an application context relocation method according to an embodiment of this application.

In MEC research of a service and system aspects (service and system aspects, SA) working group of the 3rd generation partnership project (3rd generation partnership project, 3GPP), the architecture shown in FIG. 1 is defined.

As shown in FIG. 1, the communication system includes a terminal device, a core network, an EDN, and an ECS.

One or more application clients (application clients, ACs) and one or more edge enabler clients (edge enabler clients, EECs) may be configured on the terminal device. One or more EASs and one or more EESs may be deployed in the EDN.

The architecture in FIG. 1 further includes reference points EDGE-1 to EDGE-9. The EDGE-1 reference point supports interaction between the EES and the EEC; the EDGE-2 reference point supports interaction between the EES and the core network; the EDGE-3 reference point supports interaction between the EES and the EAS; the EDGE-4 reference point supports interaction between the ECS and the EEC; the EDGE-5 reference point supports interaction between the AC and the EEC; the EDGE-6 reference point supports interaction between the ECS and the EES; the EDGE-7 reference point supports interaction between the EAS and the core network; the EDGE-8 reference point supports interaction between the ECS and the core network; and the EDGE-9 reference point supports interaction between two EESs located on a same MEC node or different MEC nodes.

It should be understood that FIG. 1 is merely an example. The communication system may further include another device, which is not shown in FIG. 1.

It should be noted that names of network elements and communication interfaces between the network elements in FIG. 1 are briefly described by using an example specified in a current protocol. However, this does not mean that embodiments of this application can be applied only to a currently known communication system. Therefore, a standard name that appears when the current protocol is used as an example for description is a functional description. A specific name of a network element, an interface, information, a message, signaling, or the like is not limited in this application, and only indicates a function of the network element, the interface, the information, the message, or the signaling, and may be correspondingly extended to another system, for example, a 4G or future communication system.

For ease of understanding, the following briefly describes some network elements, terms, and the like in this application.
1. Edge computing is an open platform that is deployed at a network edge side close to things or data sources and integrates network, computing, storage, and application core capabilities. It provides edge intelligence services nearby to meet key requirements of industry digitalization for an agile connection, a real-time service, data optimization, application intelligence, security and privacy protection, and the like. In other words, the edge computing is to directly analyze, near a local device or network in which data is generated, the data collected from a terminal device, and the data does not need to be transmitted to a cloud data processing center.
2. Multi-access edge computing (MEC) may also be referred to as mobile edge computing (mobile edge computing), and may provide a service and a cloud computing function nearby by using a radio access network, to create a carrier-class service environment with high performance, low latency, and high bandwidth. This accelerates fast downloading of content, services, and applications in a network and allows a consumer to have uninterrupted high-quality network experience.
3. A data network (data network, DN) is a service network of an operator or a third party, and may provide a service, for example, an operator service or an internet service, for the terminal device.
4. A local area data network (local area data network, LADN) is an access point (access point) of a data network that is very close to an attachment point (attachment point) of a user.
5. Edge data network (EDN): In an understanding, the EDN is a special local area data network including an edge enabling function and may be identified by using a data network access identifier (data network access identifier, DNAI) and a data network name (data network name, DNN). This is a network logic concept. In another understanding, the EDN is a peer concept of a central cloud, may be understood as a local data center, may be identified by using a DNAI, and may include a plurality of local area data networks.
6. An application instance/edge application (EAS) is an application deployed in the edge data network, and may specifically refer to an application program (for example, social media software, augmented reality (augmented reality, AR), or virtual reality (virtual reality, VR)) of a server or an instance (instance) deployed and run in the EDN. One or more EASs may be deployed in one or more EDNs for one application. EASs deployed and run in different EDNs may be considered as different EASs of one application. The EASs may share a same domain name, and use a same internet protocol (internet protocol, IP) address or use different IP addresses.

In addition, the application instance/edge application may also be referred to as an edge application (server), an application instance, an edge application instance, an MEC application (server), an EAS function, or the like.

7. An application client (AC) is a peer entity of the edge application on a terminal device side. The application client is used by an application user (user) to obtain an application service from an application server. The application client is a client program of the application on the terminal device side. The application client may be connected to the application server on a cloud to obtain the application service, or may be connected to an EAS deployed and run in one or more EDNs to obtain the application service.

8. An edge enabler server (EES) may provide an enabling capability for the EAS deployed in the EDN, and may better support deployment of an application during MEC. For example, the EES may support registration of the application, support authentication and authorization of the terminal device, and provide IP address information of the EAS for the terminal device. The EES may further support obtaining an identifier and the IP address information of the EAS, and send the identifier and the IP address information of the EAS to an ECS.

The EES is deployed in the EDN. Generally, one EAS registers with one EES, or information about one EAS is configured on one EES by using a management system. One or more EASs may register with one EES, or information about one or more EASs is configured on one EES. The EES is referred to as an EES associated with the one or more EASs. An EES may control, manage, register with, or configure an EAS associated with the EES.

9. An edge enabler client (EEC) is configured to provide a support function needed by the AC and is a peer entity of the EES on the terminal device side. The EEC is configured to: register EEC information and AC information with the EES, perform security authentication and authorization, obtain an IP address of the EAS from the EES, and provide an edge computing enabling capability for the AC, for example, discover an available EAS in the EDN and return an IP address of the EAS to the AC.

10. The edge configuration server (ECS) is responsible for EDN configuration, for example, providing EES information for the terminal device. Alternatively, the ECS may directly provide information about an application instance for the terminal device, and interact with a DNS of an application to obtain the information about the application instance. Further, the information about the application instance and the IP address is obtained from another functional entity and stored.

The ECS is further responsible for maintaining information about each EDN, where the information includes a service area and an EES address of the EDN. The service area of the EDN may be topology address information (for example, a cell identity (cell identity) or a tracking area identity (tracking area identity, TAI)) or geometric address information (for example, information such as a province, a city, a district, or a longitude and a latitude), and the service area may be a set of address information.

The ECS may be deployed in a mobile network operator (mobile network operator, MNO) domain, or may be deployed in a third-party domain by a service provider. In an implementation, an ECS network element is deployed in a distributed manner. To be specific, each ECS may manage an edge data network in a different area. It should be understood that the ECS network element may be co-located with another network element, or may be an independent network element. This application does not constitute any limitation on deployment of the ECS network element in a network architecture.

11. The terminal device is also referred to as user equipment (user equipment, UE), a mobile station (mobile station, MS), a mobile terminal (mobile terminal, MT), or the like, and is a device that provides a voice or data service for a user, or may be an internet of things device. For example, the terminal device includes a handheld device, a vehicle-mounted device, or the like that has a wireless transceiver function. Currently, the terminal device may be a mobile phone (mobile phone), a tablet computer, a notebook computer, a palmtop computer, a mobile internet device (mobile internet device, MID), a wearable device (for example, a smart watch, a smart band, or smart glasses), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. In addition, the terminal device may alternatively be a chip. A specific form of the terminal device is not limited in this application.

12. A core network is mainly configured to: manage the terminal device, and provide a function of communicating with an external network. The core network may include at least one of a user plane function (user plane function, UPF) network element, an access and mobility management function (access and mobility management function, AMF) network element, a session management function (session management function, SMF) network element, a unified data management (unified data management, UDM) network element, or a policy control function (policy control function, PCF) network element. For functions of the network elements included in the core network, refer to the standard (for example, TS 23.501) defined in 3GPP.

13. An application context (application context) may refer to running status information related to one user or a group of users, for example, a game process or historical data. Optionally, the application context may further include a context to which the one or more users subscribe on the EAS and the core network, for example, a subscribed transaction identifier. Optionally, the application context may further include a context of the one or more users on the EAS, for example, a transaction identifier to which the EAS subscribes for the one or more users.

14. EEC context: The EEC context may refer to data that is related to the user and that is stored in the EES. The EEC context may include EEC-side information and EAS-EES subscription information. The EEC-side information may include EEC registration information and EEC subscription information (for example, EAS discovery subscription and EAS dynamic information subscription). The EAS-EES subscription information may include a terminal device location API, an application context relocation event, an AC information open API, a terminal device identifier API, a quality of service (quality of service, QoS) session API, and the like.

15. Application context relocation (ACR) may also be referred to as application relocation or application context re-positioning, and is a process of relocating the application context between EASs.

An ACR procedure may mainly include the following four phases.

### Phase 1: ACR detection

In this phase, it may be determined whether context relocation needs to be executed. A detection entity may detect an event required for ACR execution. The event is, for example, that a terminal location changes or a user plane path of the terminal is updated.

### Phase 2: ACR decision

In this phase, a decision-making entity determines that context relocation needs to be executed.

### Phase 3: ACR execution

In this phase, an execution entity transfers the application context from a source EAS to a target EAS. Further, discovery of the target EAS is included. The terminal device may be further notified of related information of the target EAS, the EAS (which may be the source EAS and the target EAS) is notified to initiate application context transfer (application context transfer, ACT), and the EES or the EAS performs an application function (application function, AF) traffic influence (AF traffic influence) and carries N6 routing information of the target EAS.

### Phase 4: Post-ACR clean up

In this phase, a plurality of entities are involved. This phase includes: The EAS notifies the EEC of an ACT result via the EES, the AC initiates a new socket (socket) connection to the target EAS, and the like.

16. An ACR scenario is a specific solution for detecting and executing ACR, and includes steps such as ACR detection, ACR decision, ACR execution, and post-ACR clean up. In the ACR scenario, entities for performing the steps are involved. Currently, there are a plurality of ACR scenarios. ACR solutions corresponding to the ACR scenarios are shown in Table 1.

**Table 1**

| ACR scenario | Corresponding ACR solution |
|---|---|
| An EEC initiates ACR by using a regular EAS discovery procedure (initiation by EEC using regular EAS discovery) | ACR detection: The EEC detects an event required for ACR execution. |
| | ACR decision: The EEC and/or an AC determine/determines that context relocation needs to be executed. |
| | ACR execution includes at least one of the following content: The EEC initiates an ACR initiation procedure to a source EES, the source EES performs EEC context transfer, the source EES modifies a user plane path, and the source EES triggers a source EAS to perform ACT. |
| | Post-ACR clean up: The source EAS notifies the source EES of an ACT result, a target EAS notifies a target EES of the ACT result, and the source EES notifies the EEC of the ACT result. |
| An EEC executes ACR via a source EES (EEC executed ACR via S-EES) | ACR detection: The EEC detects an event required for ACR execution. |
| | ACR decision: The EEC determines that context relocation needs to be executed. |
| | ACR execution includes at least one of the following content: The EEC initiates an ACR initiation procedure to the source EES, the source EES performs EEC context transfer, the source EES modifies a user plane path, and the source EES triggers a source EAS to perform ACT. |
| | Post-ACR clean up: The source EAS notifies the source EES of an ACT result, a target EAS notifies a target EES of the ACT result, and the source EES notifies the EEC of the ACT result. |
| A source EAS decides to initiate ACR (S-EAS decided ACR scenario) | ACR detection: The source EAS and/or a source EES detect/detects an event required for ACR execution. |
| | ACR decision: The source EAS determines that context relocation needs to be executed. |
| | ACR execution includes at least one of the following content: The source EAS modifies a user plane path, and the source EAS performs ACT. |
| | Post-ACR clean up: The source EAS notifies the source EES of an ACT result, a target EAS notifies a target EES of the ACT result, and the source EES notifies an EEC of the ACT result. |
| A source EES executes ACR (S-EES executed ACR) | ACR detection: An EEC, a source EAS, and/or the source EES detect/detects an event required for ACR execution. |
| | ACR decision: The source EES determines that context relocation needs to be executed. |
| | ACR execution includes at least one of the following content: The source EES modifies a user plane path, and the source EES triggers the source EAS to perform ACT. |
| | Post-ACR clean up: The source EAS notifies the source EES of an ACT result, a target EAS notifies a target EES of the ACT result, and the source EES notifies the EEC of the ACT result. |
| An EEC executes ACR via a target EES (EEC executed ACR via T-EES) | ACR detection: The EEC detects an event required for ACR execution. |
| | ACR decision: The EEC determines that context relocation needs to be executed. |
| | ACR execution includes at least one of the following content: The EEC initiates an ACR initiation procedure to the target EES, the target EES performs EEC context transfer, the target EES modifies a user plane path, and the target EES triggers a target EAS to perform ACT. |
| | Post-ACR clean up: The target EAS notifies the target EES of an ACT result, and the target EES notifies the EEC of the ACT result. |

It should be understood that the five ACR scenarios shown in Table 1 are merely examples of the ACR scenarios, and names of the scenarios are merely provided as examples, and cannot constitute a limitation on this application. For specific content of the ACR scenario, refer to the standard (for example, TS23.588) defined in 3GPP.

17. ACR capability: The ACR capability in embodiments of this application may include, but is not limited to, whether ACR is supported, whether a first ACR scenario is supported, a supported ACR scenario, and a supported ACR API. An ACR scenario supported by the EES may be determined based on an ACR capability of the EES, and an ACR scenario supported by the EAS may be determined based on an ACR capability of the EAS.

In some embodiments of this application, the ACR capability of the EES may further include an EEC context transfer capability of the EES. The EEC context transfer capability of the EES includes whether the EES supports EEC context transfer, whether the EES supports an EEC context pull procedure, and whether the EES supports an EEC context push procedure. When the EES supports EEC context transfer, the EEC context transfer capability corresponding to the EES further includes an EEC context transfer procedure supported by the EES. The EEC context transfer capability may be indicated by API information supported by the EES.

In embodiments of this application, the AC and the EEC may be configured on the terminal device. A user of an application signs a service agreement with a provider of the application, and may log in to an AC that corresponds to the application and that is on the terminal device, and perform communication through a connection between the AC and the EAS, to obtain a service of the application. The EEC is a middleware layer, and is generally located in an operating system or between the AC and the operating system. The AC may obtain an edge enabling service from the EEC through an API.

In an edge computing technology, an EAS that provides an application service may be configured in an EDN near a terminal device. Application data in the terminal device may be processed in real time in the EAS close to the terminal device, and does not need to be transmitted to a central cloud for processing, to reduce latency caused by data transmission.

EASs may be deployed in a plurality of EDNs for a same application. The EASs of the same application deployed in different EDNs may provide a same service and have equivalent functions.

For example, servers of an application a may be deployed in an EDN-1 located in a place A and an EDN-2 located in a place B. An AC of the application a may be configured on a terminal device located in the place A, and may obtain an application service via an EAS in the EDN-1 near the terminal device. An AC of the application a may alternatively be configured on a terminal device located in the place B, and may obtain an application service via an EAS in the EDN-2 near the terminal device.

After accessing a network, the terminal device selects an EAS deployed in a nearby EDN to execute a service. When the terminal device moves from a service area of an EDN to a service area of another EDN, or when an EAS currently connected to the terminal device is fully loaded, the EAS currently connected to the terminal device cannot well continue to provide a service for the terminal device. To meet a service continuity requirement of an application, a new EAS needs to be reselected nearby for the terminal device, to continue to provide a service for the terminal device.

When an application service of the terminal device is switched between EASs, an application context of the terminal device needs to be relocated between the EASs.

FIG. 2 is a diagram of a scenario applicable to an ACR method according to an embodiment of this application.

As shown in FIG. 2, an EES 1, an EAS 1, and an EAS 2 may be deployed in an EDN 1, and an EES 2 and an EAS 2 may be deployed in an EDN 2. The EASs 2 in the EDN 1 and the EDN 2 may each provide a service of a current application for a terminal device. An EAS that currently provides a service for the terminal device is the EAS 2 in the EDN 1. When the terminal device moves from a service area of the EDN 1 to a service area of the EDN 2, or when the EAS 2 in the EDN 1 is fully loaded, the EAS 2 in the EDN 1 cannot continue to provide an application service for the terminal device. In this case, the application service of the current application may be switched to the EAS 2 in the EDN 2, and a context of the current application of the terminal device needs to be synchronously relocated from the EAS 2 in the EDN 1 to the EAS 2 in the EDN 2.

It should be understood that the scenario shown in FIG. 2 is merely an example, and should not constitute any limitation on this application. EASs may be deployed in more or fewer EDNs for one application. Each EDN may have a respective service area. EASs of a plurality of applications may alternatively be deployed in one EDN.

For ease of description, in embodiments of this application, an EAS that currently provides an application service for a terminal device is referred to as a source EAS (source EAS, S-EAS), or a currently connected EAS, for example, the EAS 2 in the EDN 1 in FIG. 2. An EES associated with the source EAS is referred to as a source EES (source EES, S-EES), or a currently connected EES, for example, the EES 1 in FIG. 2. After the application service of the terminal device is switched, a new EAS that provides an application service for the terminal device is referred to as a target EAS (target EAS, T-EAS), for example, the EAS 2 in the EDN 2 in FIG. 2. An EES associated with the target EAS is referred to as a target EES (target EES, T-EES), for example, the EES 2 in FIG. 2.

After the terminal device is connected to an EAS, the terminal device needs to negotiate with the EAS and an EES associated with the EAS to determine an ACR scenario of an application, so that the application can perform ACR detection, decision, and execution procedures based on the determined ACR scenario, to complete a switching process when the application service needs to be switched between EASs.

When the terminal device, an EAS currently connected to the terminal device (or selected by the terminal device), and an EES associated with the EAS have no jointly supported ACR scenario, for example, an EEC, the EAS, or the EES does not support ACR execution, an ACR scenario of a current application cannot be determined through negotiation. Therefore, when the EAS that currently provides an application service for the terminal device is fully loaded, or when the terminal device leaves a service area of an EDN in which the EAS is located, the current application cannot implement ACR, and smooth switching between EASs cannot be completed.

Therefore, this application provides an ACR method. A target EES that supports ACR execution is determined, and ACR is executed based on the target EES, to complete relocation of a context of a current application.

In this way, the context of the current application can be relocated via the target EES. When the current application has no corresponding ACR scenario, for example, when a terminal device, an EAS currently connected to the terminal device (or selected by the terminal device), and an EES associated with the EAS have no jointly supported ACR scenario, relocation of the context of the current application may also be implemented. When the EAS currently connected to the terminal device cannot continue to provide an application service, smooth switching between EASs can be ensured, thereby ensuring stability and continuity of the application service.

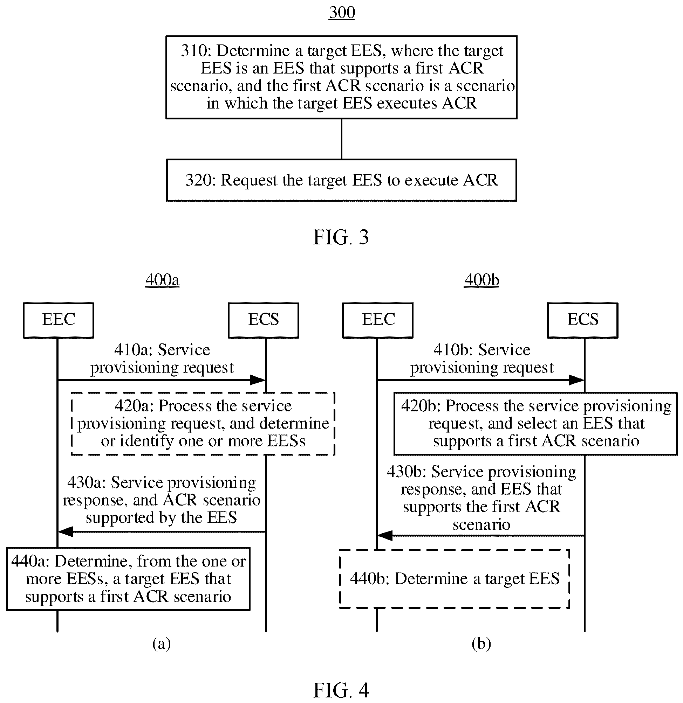

The following describes, with reference to FIG. 3 to FIG. 11, an application context relocation method provided in this application.

To better understand embodiments of this application, the following points are first described:
First, to clearly describe the technical solutions in embodiments of this application, the terms such as "first" and "second" are used in embodiments of this application to distinguish between same items or similar items that provide basically same functions. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

Second, in embodiments of this application, the terms and English abbreviations, for example, the edge application server, the edge enabler server, application context relocation, the EEC, the EES, the source EES, the target EES, the EAS, the source EAS, the target EAS, and the ACR, are all examples provided for ease of description, and should not constitute any limitation on this application. This application does not exclude a possibility of defining another term that can implement a same or similar function in an existing or future protocol.

Third, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. A character "/" usually indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

Fourth, the table in embodiments of this application is merely an example, and does not constitute a limitation on the protection scope of this application. For example, a value of information in the table is merely an example, and another value may be configured. This is not limited in this application. For another example, proper deformations and adjustments such as splitting and combination may be performed based on the tables in this specification. For another example, names of the parameters shown in titles of the foregoing tables may alternatively be other names that can be understood by a communication apparatus, and values or representation manners of the parameters may alternatively be other values or representation manners that can be understood by the communication apparatus. For another example, during implementation of the foregoing tables, another data structure, for example, an array, a queue, a container, a stack, a linear table, a pointer, a linked list, a tree, a graph, a structure, a class, a pile, or a hash table, may alternatively be used.

Fifth, "predefinition" or "preconfiguration" may be implemented by pre-storing corresponding code or a corresponding table in a device (for example, including the terminal device and the ECS) or in another manner that can be used to indicate related information. A specific implementation of "predefinition" or "preconfiguration" is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Sixth, in embodiments of this application, descriptions such as "when", "in a case", and "if" mean that a device (for example, a terminal device or an EES described in the following) performs corresponding processing in an objective situation, and are not intended to limit time, and the device (for example, the terminal device or the EES described in the following) is not required to perform a determining action during implementation; and do not mean any other limitation.

Seventh, in this application, "sending information to... (terminal)" may be understood as that a destination end of the information is the terminal, and may include directly or indirectly sending the information to the terminal. "receiving information from... (terminal)" may be understood as that a source end of the information is the terminal, and may include directly or indirectly receiving the information from the terminal. Necessary processing may be performed on information between the source end for sending the information and the destination end, for example, a format changes. However, the destination end may understand valid information from the source end. Similar descriptions in this application may be understood similarly. Details are not described herein again.

Eighth, an example of a message carrying information in this application is merely an example. The following "the second information may be, for example, carried in the foregoing service provisioning request message" may be understood as that the second information may be carried in the service provisioning request message, or may be carried in another message. Similar descriptions in this application may be understood similarly. A type of a message used to carry information is not limited in this application, and a name of the message used to carry information is merely provided as an example, and is not limited.

Ninth, embodiments in this application may be implemented separately, or may be implemented in combination. This is not limited in this application.

FIG. 3 is a schematic flowchart of an ACR method according to an embodiment of this application.

The method shown in FIG. 3 is an ACR method provided in an embodiment of this application from a perspective of a terminal device. The method may be performed by the terminal device, or may be performed by a component (for example, a circuit, a chip, or a chip system) in the terminal device, or may be implemented through software and/or hardware. This is not limited in this application. The following uses an EEC configured on the terminal device as an example for description.

Refer to FIG. 3. The method 300 includes step 310 and step 320.

Step 310: The EEC determines a target EES, where the target EES is an EES that supports a first ACR scenario, and the first ACR scenario is a scenario in which the target EES executes ACR.

The first ACR scenario is the scenario in which the target EES executes ACR, for example, may be a scenario "EEC executed ACR via T-EES". In the first ACR scenario, an ACR procedure may be as follows: The EEC detects an event required for ACR execution, and decides whether to execute ACR, and the target EES executes ACR.

It should be understood that descriptions of the "first ACR scenario" in this application are merely an example for differentiation, and do not mean a limitation on a name of an ACR scenario.

In this embodiment of this application, that the EES supports the first ACR scenario indicates that the EES may support completion of ACR execution as the target EES. Correspondingly, that an EAS supports the first ACR scenario indicates that the EAS may support completion of ACR execution as a target EAS.

The EEC may determine the target EES that supports the first ACR scenario. Therefore, when the EEC requests the target EES to execute ACR, the target EES can execute ACR.

The EEC may determine the target EES by using a service provisioning (service provisioning) procedure or an EES discovery procedure.

The following describes step 310 in detail from a perspective of interaction between network elements with reference to (a) in FIG. 4 and (b) in FIG. 4.

(a) in FIG. 4 is a diagram of a method for determining the target EES by the EEC via an ECS according to an embodiment of this application. In the method 400a, the EEC determines, based on an ACR scenario supported by an EES, the target EES that supports the first ACR scenario. The method 400a may include step 410a to step 440a.

Step 410a: The EEC sends a service provisioning request (service provisioning request) message to the ECS.

The service provisioning request message may also be referred to as a service configuration request message. The message may include an EEC identifier (EEC ID), a security credential, AC configuration information (AC profile), a terminal device identifier, connectivity information, a terminal device location, and the like. The terminal device identifier may include a generic public subscription identifier (generic public subscription identifier, GPSI) and the like.

In this embodiment of this application, the EEC may further send information to the ECS, to indicate to request to obtain an ACR capability of the EES. For ease of description, in this embodiment of this application, the information is referred to as second information. It should be understood that this cannot be construed as a limitation on this application. For example, the second information may be carried in the service provisioning request message.

For example, when a current application has no corresponding ACR scenario, or when the terminal device and the EES do not determine an ACR scenario through negotiation, the EEC may send the second information to the ECS. When an ACR scenario corresponding to the current application is the first ACR scenario, the second information may further indicate that a selected ACR scenario is the first ACR scenario.

Step 420a: After receiving the service provisioning request message, the ECS processes a service provisioning request, and determines or identifies one or more EESs.

In some embodiments, the ECS may perform an authorization check to verify whether the EEC is authorized to perform an operation.

The ECS may match, based on the AC configuration information and/or information about the terminal device location, an EES that registers with the ECS.

For example, if the check succeeds, the ECS may select the one or more EESs based on the service provisioning request. The ECS may select an EES whose service area includes the terminal device location, an EES whose registered EAS list includes an EAS identifier (EAS ID) matching the AC configuration information, and the like.

In this embodiment of this application, the ECS may obtain related information of the one or more EESs. The related information of the EESs may include information indicating at least one EES, for example, a list of the EESs. The related information of the EESs may further include information indicating an ACR capability of the at least one EES, and may further include information indicating at least one EAS associated with the EES, and information indicating an ACR capability of the at least one EAS.

The related information of the EESs may be obtained by the ECS when the EESs register with the ECS. The EESs may register with the ECS, and the ECS may store the related information of the EESs. When an EAS determines that the EAS needs to register with an EES, for example, when the EAS is configured and started, the EAS may also register with the EES, and the EES may store information about the EAS.

In some embodiments, the EES may obtain the information about the EAS through a network management system, the ECS may also obtain related information of the EES through the network management system, and a registration procedure does not need to be performed. In some embodiments, the ECS may store the related information of the one or more EESs, where the related information of the EESs may be preconfigured. The EES may also store information about one or more EASs, where the information about the EASs may also be preconfigured. This is not limited in this application.

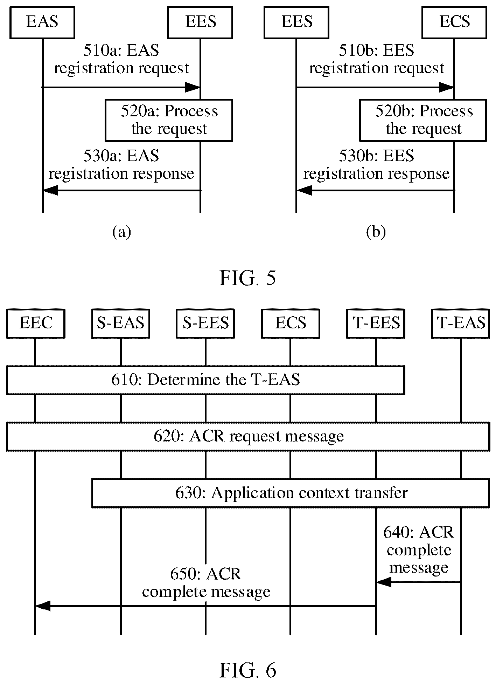

In an example, the following describes, with reference to (a) in FIG. 5, a procedure in which an EAS registers with an EES, and describes, with reference to (b) in FIG. 5, a procedure in which the EES registers with the ECS.

(a) in FIG. 5 is a diagram of the procedure in which the EAS registers with the EES.

An EAS registration procedure may include step 510a to step 530a.

Step 510a: The EAS sends an EAS registration (EAS registration) request message to the EES.

The EAS registration request message may carry EAS configuration information (EAS profile) and an EAS security credential, and may further include recommended registration expiration time, which is also referred to as registration validity time.

In this embodiment of this application, the EAS may further send information to the EES, to indicate an ACR capability of the EAS, for example, whether the EAS supports ACR, or an ACR scenario supported by the EAS. The information may be carried in the EAS registration request message, for example, may be included in the EAS configuration information. For example, the information may be represented by using a "service continuity support" parameter.

Step 520a: The EES processes a registration request.

The EES performs a registration authorization check based on the EAS registration request message, to verify whether the EAS is authorized to register with the EES.

After the authorization succeeds, the EES stores the EAS configuration information for future use (for example, for serving an EAS discovery request received from the EEC). The EES may alternatively store the ACR capability of the EAS.

Step 530a: The EES sends an EAS registration response message to the EAS.

The EES replies to the EAS with the EAS registration response message. If the registration succeeds, the EAS registration response message may carry information indicating that the registration succeeds. The EES may further provide expiration time, to indicate, to the EAS, time at which the registration automatically expires. If the registration fails, the EAS response message may carry information indicating that the registration fails, and provide a failure cause. (b) in FIG. 5 is a diagram of the procedure in which the EES registers with the ECS.

An EES registration procedure may include step 510b to step 530b.

Step 510b: The EES sends an EES registration request message to the ECS.

The EES registration request message may carry EES configuration information. The EES configuration information may include at least one of the following information: an identifier of the EES, endpoint (endpoint) information of the EES, a list of identifiers of EASs that register with the EES, and the like. The EES configuration information further includes a security credential of the EES. The EES configuration information may further include registration validity time.

In this embodiment of this application, the EES may further send information to the ECS, to indicate an ACR capability of the EES, for example, an ACR scenario supported by the EES. The information may be carried in the EES registration request message, for example, included in the EES configuration information.

The EES may further send information to the ECS, to indicate an ACR capability of an EAS that registers with the EES, for example, an ACR scenario supported by the EAS. The information may also be carried in the EES registration request message.

Step 520b: The ECS processes a registration request.

After receiving the EES registration request message, the ECS may store the EES configuration information locally. The ECS may alternatively store the ACR capability of the EES and the ACR capability of the EAS that registers with the EES.

Step 530b: The ECS sends an EES registration response message to the EES.

After receiving the EES registration request message from the EES, the ECS may further send a corresponding response message.

It should be noted that the registration procedures shown in (a) in FIG. 5 and (b) in FIG. 5 may be independent embodiments. The procedure in which the EAS registers with the EES and the procedure in which the EES registers with the ECS may occur for one or more times when the method 300 is performed, at any time before the method 300 is performed, or at any time after the method 300 is performed.

The EES registration procedure and the EAS registration procedure may not be performed continuously in terms of time. Within any time interval after the EES registers with the ECS, the EAS may register with the EES. After the EAS registers with the EES, the EES may register with the ECS within any time interval.

Step 430a: The ECS sends a service provisioning response message to the EEC.

The service provisioning response message may also be referred to as a service configuration response message. If the ECS cannot determine EES information based on the service provisioning request message, the service provisioning response message carries an information element indicating the ECS to reject the service provisioning request of the EEC, and provides a failure cause. If the ECS successfully processes the service provisioning request of the EEC, the service provisioning response message may carry EDN connectivity information and the EES information (which may include a list of the one or more EESs determined or identified by the ECS, an address of the one or more EESs, identification information of the one or more EESs, and the like). The service provisioning response message may further carry information about an EAS associated with each of the one or more EESs determined or identified by the ECS.

In this embodiment of this application, the ECS may further send information to the EEC, to indicate an ACR capability of each of the one or more EESs identified or determined by the ECS, for example, an ACR scenario supported by the EES. For ease of description, in this embodiment of this application, the information is referred to as first information. It should be understood that this cannot be construed as a limitation on this application. For example, the first information may be carried in the service provisioning response message, for example, included in the EES information.

In some embodiments, the first information may further indicate an ACR capability of the EAS associated with each of the one or more EESs determined or identified by the ECS. In some embodiments, the ECS may send, to the EEC, information about all EESs that register with or are configured on the ECS. In this case, step 420a is optional.

Step 440a: The EEC determines, from the one or more EESs, the target EES that supports the first ACR scenario.

The information received by the EEC may indicate the one or more EESs and the ACR capability of the one or more EESs. The EEC may select an EES that supports the first ACR scenario as the target EES.

In some embodiments, the EEC further receives information indicating EASs associated with the EESs and ACR scenarios supported by the EASs. The EEC may select an EES associated with an EAS that supports the first ACR scenario as the target EES.

For example, the target EES determined by the EEC supports the first ACR scenario, and at least one EAS associated with the target EES also supports the first ACR scenario.

In some embodiments, if there is no EES that supports the first ACR scenario in the EES information from the ECS, the EEC cannot determine the target EES.

(b) in FIG. 4 is another diagram of a method for determining the target EES by the EEC via an ECS according to an embodiment of this application. In the method 400b, the ECS selects, based on an ACR scenario supported by an EES, the EES that supports the first ACR scenario, and sends related information of the EES to the EEC. The method 400b may include step 410b to step 440b.

Step 410b: The EEC sends a service provisioning request message to the ECS. For descriptions of the service provisioning request message, refer to step 410a. Details are not described herein again.

Optionally, the EEC may further send second information to the ECS. The second information may indicate at least one of the following content: the EES that supports the first ACR scenario is to be selected; the EES that supports the first ACR scenario is to be preferentially selected; a source EES and/or a source EAS cannot execute ACR; or a current application has no corresponding ACR scenario. For example, the second information may be carried in the service provisioning request message.

For example, when the current application has no corresponding ACR scenario, or when the terminal device and the EES do not determine an ACR scenario through negotiation, the EEC may send the second information to the ECS. When an ACR scenario corresponding to the current application is the first ACR scenario, the second information may further indicate that a selected ACR scenario is the first ACR scenario.

Step 420b: After receiving the service provisioning request message, the ECS processes a service provisioning request, and selects the EES that supports the first ACR scenario.

After receiving the request, optionally, the ECS may perform an authorization check to verify whether the EEC is authorized to perform an operation.

The ECS may determine, based on the received information, that the EES that supports the first ACR scenario needs to be selected. For example, the ECS may determine, based on the second information from the EEC, that the EES that supports the first ACR scenario needs to be selected.

Optionally, the ECS may match, based on AC configuration information and/or information about a terminal device location, an EES that registers with the ECS, and select, based on an ACR scenario supported by the EES, the EES that supports the first ACR scenario.

For example, the ECS may select an EES whose service area includes the terminal device location, an EES whose registered EAS list includes an EAS identifier (EAS ID) matching the AC configuration information, or an EES whose service area includes the terminal device location and whose registered EAS list includes the EAS ID matching the AC configuration information. After selecting one or more EESs, the ECS may further determine, from the one or more EESs, one or more EESs that support the first ACR scenario. Alternatively, when selecting an EES, the ECS may add a condition, to be specific, the EES needs to support the first ACR scenario.

Optionally, the ECS may select an EES associated with an EAS that supports the first ACR scenario. In other words, the one or more EESs selected by the ECS support the first ACR scenario. At least one of EASs associated with the EESs also supports the first ACR scenario.

Step 430b: The ECS sends a service provisioning response message to the EEC.

For specific descriptions of the service provisioning response message, refer to step 430a.

After selecting, determining, or identifying the one or more EESs that support the first ACR scenario, the ECS may indicate the one or more EESs by using EES information in the service provisioning response message sent to the EEC.

Step 440b: The EEC determines the target EES.

In some embodiments, if information received by the EEC indicates one EES, the EEC may determine the EES as the target EES. In some embodiments, if information received by the EEC indicates a plurality of EESs that support the first ACR scenario, the EEC may determine one of the EESs as the target EES. A specific determining method is not limited in this application. For example, the target EES may be determined randomly, or may be determined according to a local policy.

In the method 400b, step 440b is an optional step.

(a) in FIG. 4 and (b) in FIG. 4 each provide the method for determining the target EES. The step of determining, from the EES, the EES that supports the first ACR scenario may be performed by the ECS, so that the terminal device does not need to perform selection, and load of the terminal device can be reduced. Alternatively, the step may be performed by the EEC, so that the ECS does not need to perform selection based on the ACR capability of the EES, and load of the ECS can be reduced.

In step 310, the target EES determined by the EEC supports the first ACR scenario, and the EES can execute ACR as the target EES. During EAS switching of a current application, the EEC may smoothly complete application context relocation via the target EES, to ensure service continuity of the current application.

Step 320: The EEC requests the target EES to execute ACR.

After determining the target EES, the EEC may establish a communication connection to the target EES based on an address of the target EES obtained from the ECS, and request the target EES to execute ACR. A method for the EEC to request the target EES to execute ACR includes procedures such as discovering the target EAS, and transferring an application context between the target EAS and the source EAS.

With reference to FIG. 6, the following describes step 320 in detail from a perspective of interaction between network elements.

Refer to FIG. 6. Step 320 may further include step 610 to step 650.

Step 610: The EEC may perform an EAS discovery procedure and determine the target EAS that supports the first ACR scenario.

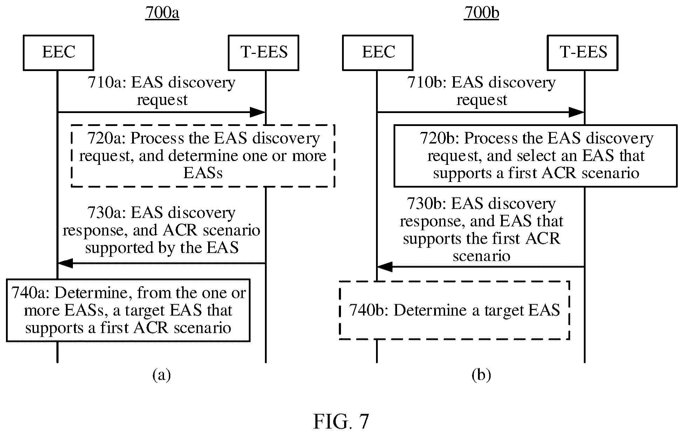

For example, a procedure in which the EEC determines the target EAS may be shown in (a) in FIG. 7 or (b) in FIG. 7.

(a) in FIG. 7 is a diagram of a method for determining the target EAS by the EEC according to an embodiment of this application. In the method 700a, the EEC determines, based on an ACR scenario supported by an EAS, the target EAS that supports the first ACR scenario. The method 700a may include step 710a to step 740a.

Step 710a: The EEC sends an EAS discovery request message to the target EES.

Optionally, the EAS discovery request message may include an EEC ID and a security credential. The EAS discovery request message may further include an EAS discovery filter (EAS discovery filter). The EAS discovery filter may include an EAS filtering parameter to retrieve information about a particular EAS or a particular type of EASs (for example, a game application program).

Optionally, the EEC may further send information to the target EES, to indicate to request to obtain an ACR capability of the EAS. For ease of description, in this embodiment of this application, the information is referred to as sixth information. It should be understood that this cannot be construed as a limitation on this application.

The sixth information may be carried in the EAS discovery request message, for example, included in the EAS discovery filter. When an ACR scenario corresponding to a current application is the first ACR scenario, the sixth information may further indicate that a selected ACR scenario is the first ACR scenario.

Step 720a: The target EES processes an EAS discovery request and determines or identifies one or more EASs.

In some embodiments, after receiving the EAS discovery request sent by the EEC, the target EES performs an authorization check and selects the one or more EASs.

For example, if the target EES determines that the EEC is authorized to discover a requested EAS, the target EES may select the one or more EASs based on the provided EAS discovery filter and the terminal device location. If the EAS discovery filter is not provided in the EAS discovery request message, the target EES may select the one or more EASs based on terminal device-specific service information and the terminal device location that are on the target EES, or the target EES selects the one or more EASs according to an application edge computing service provider (edge computing service provider, ECSP) policy (for example, based only on the terminal device location). If the target EES cannot select the one or more EASs based on the information carried in the EAS discovery request message or the terminal device-specific service information and the terminal device location that are on the target EES, or according to the ECSP policy, the target EES may reject the EAS discovery request of the EEC and provide a corresponding failure cause.

Step 730a: The target EES sends an EAS discovery response message to the EEC.

If the target EES successfully determines or identifies the one or more EASs, the EAS discovery response message may include EAS information (which may include a list of EASs determined or identified by an EES, EAS configuration information, and the like). The EAS information may indicate the one or more EASs determined or identified by the target EES. If the target EES cannot determine or identify the one or more EASs, the EAS discovery response message may include a failure indication and a failure cause.

In this embodiment of this application, the target EES may further send information to the EEC, to indicate an ACR capability of each of the one or more EASs determined or identified by the target EES, for example, an ACR scenario supported by the EAS. For ease of description, in this embodiment of this application, the information is referred to as fifth information. It should be understood that this cannot be construed as a limitation on this application. For example, the fifth information may be carried in the EAS discovery response message, for example, included in the EAS information.

In some embodiments, the target EES may send, to the EEC, information about all EASs that register with or are configured on the target EES. In this case, step 720a is optional.

Step 740a: The EEC determines, from the one or more EASs, the target EAS that supports the first ACR scenario.

The information received by the EEC may indicate the one or more EASs and the ACR capability of the one or more EASs. The EEC may select an EAS that supports the first ACR scenario as the target EAS.

(b) in FIG. 7 is another diagram of a method for determining the target EAS by the EEC according to an embodiment of this application. In the method 700b, the target EES selects, based on an ACR scenario supported by an EAS, an EAS that supports the first ACR scenario, and sends related information of the EAS to the EEC. The method 700b may include step 710b to step 740b.

Step 710b: The EEC sends an EAS discovery request message to the target EES.

For descriptions of the EAS discovery request message, refer to step 710a. Details are not described herein again.

Optionally, the EEC may further send sixth information to the target EES. The sixth information may indicate at least one of the following content: the EAS that supports the first ACR scenario is to be selected; the EAS that supports the first ACR scenario is to be preferentially selected; the source EES and/or the source EAS cannot execute ACR; or a current application has no corresponding ACR scenario. For example, the sixth information may be carried in the service provisioning request message.

When an ACR scenario corresponding to the current application is the first ACR scenario, the second information may further indicate that a selected ACR scenario is the first ACR scenario. Step 720b: The target EES processes an EAS discovery request and selects the EAS that supports the first ACR scenario.

The target EES may determine that the EAS that supports the first ACR scenario needs to be selected. For example, the target EES may determine, based on the sixth information from the EEC, that the EAS that supports the first ACR scenario needs to be selected.

The target EES may select one or more EASs that support the first ACR scenario. For example, the target EES may select the one or more EASs based on the method in step 720a, and determine, from the one or more EASs based on an ACR capability of the one or more EASs, the one or more EASs that support the first ACR scenario. Alternatively, when an EAS is selected based on the method in step 720a, a condition may be added, to be specific, the EAS needs to support the first ACR scenario.

Step 730b: The target EES sends an EAS discovery response message to the EEC.

For specific descriptions of the EAS discovery response message, refer to step 730a. After selecting the one or more EASs that support the first ACR scenario, the target EES may indicate the one or more EASs by using EAS information in the EAS discovery response message sent to the EEC.

Step 740b: The EEC determines the target EAS.

In some embodiments, if information received by the EEC indicates one EAS, the EEC may determine the EAS as the target EAS. In some embodiments, if information received by the EEC indicates a plurality of EASs that support the first ACR scenario, the EEC may determine one of the EASs as the target EES. A specific determining method is not limited in this application. For example, the target EAS may be determined randomly, or may be determined according to a local policy.

In the method 700b, step 740b is an optional step.

Step 740a in the method 700a or step 740b in the method 700b may alternatively be performed by an AC. For example, the EEC may submit the EAS information to the AC through inter-layer interaction, and the AC may determine the target EAS from the one or more EASs received by the EEC.

(a) in FIG. 7 and (b) in FIG. 7 each provide the method for determining the target EAS. The step of determining, from the EAS, the EAS that supports the first ACR scenario may be performed by the target EES, so that the terminal device does not need to perform selection, and load of the terminal device can be reduced. Alternatively, the step may be performed by the terminal device, so that the target EES does not need to perform selection based on the ACR capability of the EAS, and load of the target EES can be reduced.

In step 610, the EEC may discover an EAS that is associated with the target EES and that supports the first ACR scenario, and use the EAS as the target EAS. The EAS can complete ACR as the target EAS, and application context relocation can be smoothly completed via the target EAS.

Step 620: The EEC sends an ACR request message to the target EES, to request the target EES to perform at least one of the following actions: interacting with the target EAS to trigger the target EAS to perform context transfer, or updating a user plane path.

An ACR request may also be referred to as an application relocation request (application relocation request). The ACR request message may carry information about the terminal device, for example, the terminal device identifier, the terminal device location, and an AC identifier. The ACR request message may further carry an address (for example, an IP address or a URL address) of the source EAS and an identifier of a current application (for example, a domain name (fully qualified domain name, FQDN) or a uniform resource locator (uniform resource locator, URL) of the application).

The target EES may obtain an address of the source EES and the address of the source EAS based on the ACR request message.

Step 630: The target EES indicates the target EAS to request an application context from the source EAS, where the application context is transferred between the source EAS and the target EAS.

The target EES may send a message to the target EAS, to request to relocate a context of the current application of the terminal device on which the EEC is located. Correspondingly, the target EAS may obtain information about the source EAS, for example, the address of the source EAS, and the information about the terminal device from the target EES.

The target EAS may notify the source EAS to send the context of the current application. Correspondingly, the target EAS receives the context of the current application.

In an implementation, the source EAS may transfer the context of the current application to the target EES via the source EES, and the target EES forwards the received application context to the target EAS.

Step 640: The target EAS sends an ACR complete message to the target EES.

After receiving the context of the current application of the terminal device, the target EAS determines that the application context is successfully received, in other words, the context of the current application may be reconstructed in the target EAS to form an application context that can be used by a client of the current application of the terminal device.

The target EAS may send a message to the target EES, to indicate that ACT is completed and indicate an ACT result.

Optionally, after ACT is completed, the source EAS may further send a notification message to the source EES, to indicate that application context relocation succeeds.

Step 650: After receiving the ACR complete message sent by the target EAS, the target EES sends the ACR complete message to the EEC, to indicate that ACT is completed.

After receiving the ACR complete message sent by the target EAS, the target EES may further trigger update of a user plane path of the current application. The target EES may trigger an SMF to insert a new user plane path and uplink data split (uplink classifier, UL CL) or a branch point (branch point, BP) for the current application of the terminal device. The step may alternatively be triggered by the target EAS.

The step of triggering the update of the user plane path of the current application may alternatively be performed synchronously with step 630 or step 640. For example, the step may be performed after the target EES sends the message to the target EAS, to request to relocate the application context, or may be performed after ACT is completed. This is not limited in this application.

A specific method for performing step 620 to step 650 may be performed with reference to a conventional technology. Details are not described again.

Based on the technical solution, when determining the target EES, the terminal device may indicate the ECS to select an EES that supports the first ACR scenario, so that the target EES determined by the terminal device can support the first ACR scenario. The ECS may alternatively send an ACR capability of an EES to the terminal device, so that the terminal device can select the target EES that supports the first ACR scenario. In this way, the terminal device can smoothly execute ACR via the target EES. The terminal device may indicate the target EES to select an EAS that supports the first ACR scenario, so that the EAS determined by the terminal device can support the first ACR scenario. The target EES may alternatively indicate an ACR capability of an EAS to the terminal device, so that the terminal device selects the target EAS that supports the first ACR scenario. In this way, the EAS can complete application context transfer as the target EAS. In this way, a target EES-based ACR procedure can be smoothly performed, and when a service of a current application is switched between EASs, an application context is successfully relocated, so that continuity of the service of the current application is ensured.

The terminal device may perform the method 300 when detecting an event required for ACR execution.

For example, the event required for ACR execution may include one or more of the following:

The terminal device moves out of a service area of a currently connected EAS;
the EEC receives an application context relocation request from the AC;
the terminal device detects that quality of the current application in the currently connected EAS is low, for example, quality of a connection to the currently connected EAS is poor, for example, latency is high or a packet loss rate is large; and
the EEC receives a session establishment message from the SMF, the EEC receives a new IP prefix, or the like

In this embodiment of this application, an event that causes the source EAS to fail to provide an application service for the terminal device corresponds to the event required for ACR execution.

Optionally, the EEC may execute ACR by using the method 300 when determining to execute ACR based on the first ACR scenario.

In some embodiments, when the terminal device is connected to an EES, the currently connected EES may determine the first ACR scenario as a selected ACR scenario. In other words, when there is an ACR requirement, ACR needs to be executed based on the first ACR scenario. The currently connected EES may send information to the EEC, to indicate to execute ACR based on the first ACR scenario, indicate to select an EES that supports the first ACR scenario, or indicate that an ACR scenario corresponding to the current application is the first ACR scenario. For ease of description, in this embodiment of this application, the information is referred to as fourth information. It should be understood that this cannot be construed as a limitation on this application. In an example, the fourth information may be carried in an ACR solution selection notification (ACR scenario selection notification) message sent by the EES to the EEC.

In this embodiment of this application, the EES currently connected to the terminal device may obtain, from the terminal device, information indicating an ACR capability of the terminal device (including an ACR capability of the EEC and an ACR capability of the AC). The EES may determine the ACR scenario corresponding to the current application based on the ACR capability of the AC, the ACR capability of the EEC, an ACR capability of the EES currently connected to the terminal device, and an ACR capability of the EAS currently connected to the terminal device (or an EAS selected by the terminal device). For example, the first ACR scenario is determined as the ACR scenario corresponding to the current application. When the terminal device (including the AC and the EEC), the EAS currently connected to the terminal device (or selected by the terminal), and the EES currently connected to the terminal device have no jointly supported ACR scenario, the EES currently connected to the terminal device may determine the first ACR scenario as the selected ACR scenario, and send the fourth information to the EEC. Alternatively, when the terminal device (including the AC and the EEC), the EAS currently connected to the terminal device (or selected by the terminal), and the EES that is associated with the EAS and that is currently connected to the terminal device have a jointly supported ACR scenario, the EES currently connected to the terminal device may determine the first ACR scenario as the selected ACR scenario, and send the fourth information to the EEC.

The EEC may determine, based on the fourth information from the EES, to execute ACR based on the first ACR scenario. In some embodiments, the EES may alternatively send information to the EEC, to indicate that the current application has no corresponding ACR scenario, indicate that there is no determined ACR scenario, or indicate that the currently connected EES or the EAS associated with the EES cannot execute ACR. For ease of description, in this embodiment of this application, the information is referred to as third information. It should be understood that this cannot be construed as a limitation on this application. In an example, the third information may be carried in an ACR solution selection notification (ACR scenario selection notification) message or an EAS information provisioning response (EAS information provisioning response) message sent by the EES to the EEC.

When the terminal device (including the AC and the EEC), the EAS currently connected to the terminal device (or selected by the terminal device), and the EES associated with the EAS have no jointly supported ACR scenario, the EES currently connected to the terminal device may send the third information to the EEC.

After receiving the third information from the EES, the EEC may determine that the current application has no corresponding ACR scenario, and determine the first ACR scenario as the selected ACR scenario, that is, when there is an ACR requirement, ACR needs to be executed based on the first ACR scenario.

In some embodiments, the EEC may receive the information from the EES currently connected to the terminal device, and obtain the ACR scenario supported by the EES and the EAS currently connected to the terminal device (or selected by the terminal device), or the terminal device may determine the ACR scenario supported by the EEC and the AC. The terminal device may determine, based on the ACR scenario supported by the EES and the EAS currently connected to the terminal device (or selected by the terminal device) and the ACR scenario supported by the EEC and the AC, the ACR scenario corresponding to the current application.

For example, when the terminal device (including the AC and the EEC), the EAS currently connected to the terminal device (or selected by the terminal device), and the EES associated with the EAS have no jointly supported ACR scenario, the EEC may determine the first ACR scenario as the ACR scenario corresponding to the current application. Alternatively, when the terminal device (including the AC and the EEC), the EAS currently connected to the terminal device (or selected by the terminal device), and the EES associated with the EAS have no jointly supported ACR scenario, the EEC may determine the first ACR scenario as the ACR scenario corresponding to the current application.

The foregoing content describes in detail, with reference to FIG. 3 to FIG. 7, the application context relocation method provided in embodiments of this application.

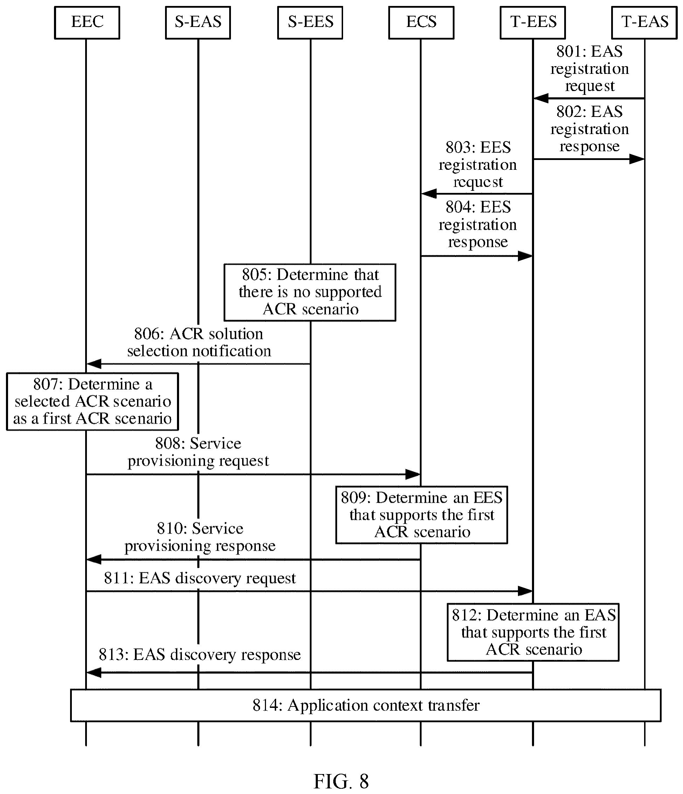

The following describes, with reference to FIG. 8 to FIG. 11, several possible implementations of the application context relocation method provided in this application.

FIG. 8 shows a possible implementation of an application context relocation method according to an embodiment of this application.

In this implementation, an EEC determines a selected ACR scenario as a first ACR scenario, an ECS determines an EES that supports the first ACR scenario, and a target EES determines an EAS that supports the first ACR scenario.

The implementation shown in FIG. 8 includes step 801 to step 814.

Step 801: A target EAS sends an EAS registration request message to the target EES, where the EAS registration request message carries EAS configuration information (including an ACR scenario supported by the EAS).

Step 802: The target EES sends an EAS registration response message to the target EAS.

A specific method for the target EAS to register with the target EES shown in step 801 and step 802 may be performed with reference to the method shown in (a) in FIG. 5. Details are not described herein again.

Step 803: The target EES sends an EES registration request message to the ECS, where the EES registration request message carries information indicating an ACR scenario supported by the EES and an ACR scenario supported by an EAS associated with the EES.

Step 804: The ECS sends an EES registration response message to the target EES.

A specific method for the target EES to register with the ECS shown in step 803 and step 804 may be performed with reference to the method shown in (b) in FIG. 5. Details are not described herein again. Step 801 to step 804 are optional steps.

It should be understood that, based on the steps, a source EAS may register with a source EES, and the source EES may also register with the ECS.

Step 805: The source EES determines that there is no an ACR scenario supported by a current application.

The source EES may obtain, through a connection to a terminal device, an ACR scenario supported by the terminal device, for example, an ACR scenario supported by an AC and the EEC. When the terminal device, the source EES, and the source EAS have no jointly supported ACR scenario, the source EES may determine that there is no ACR scenario supported by the current application.

Step 806: The source EES sends an ACR solution selection notification message to the EEC, where the message may carry an AC ID and an EAS ID of the current application, and information indicating that there is no ACR scenario supported by the current application.

Step 807: The EEC determines the selected ACR scenario as the first ACR scenario.

The EEC may determine, based on the information that indicates that there is no ACR scenario supported by the current application and that is received from the source EES, that the current application has no available ACR scenario, and the EEC may determine the first ACR scenario as the ACR scenario of the current application.

Step 805 to step 807 are optional steps.

Step 808: The EEC sends a service provisioning request message to the ECS, where the message carries second information, which may indicate at least one of the following content: the EES that supports the first ACR scenario is to be selected; the EES that supports the first ACR scenario is to be preferentially selected; the source EES and/or the source EAS cannot execute ACR; or the current application has no corresponding ACR scenario.

The EEC may perform step 808 when detecting an event required for ACR execution, for example, when the terminal device moves out of a service area of a currently connected EAS.

For a specific method for performing step 808, refer to step 410b. Details are not described herein again.

Step 809: The ECS determines one or more EESs that support the first ACR scenario.

For a specific method for performing step 809, refer to step 420b. Details are not described herein again.

Step 810: The ECS sends a service provisioning response message to the EEC, where EES information carried in the message indicates the one or more EESs that are determined or identified by the ECS and that support the first ACR scenario. The EEC may select the target EES from the one or more EESs.

For a specific method for performing step 810, refer to step 430b and step 440b. Details are not described herein again.

Step 811: The EEC sends an EAS discovery request message to the target EES, where the message carries sixth information, which may indicate at least one of the following content: the EAS that supports the first ACR scenario is to be selected; the source EES and/or the source EAS cannot execute ACR; or the current application has no corresponding ACR scenario.

For a specific method for performing step 811, refer to step 710b. Details are not described herein again.

Step 812: The target EES determines one or more EASs that support the first ACR scenario.

For a specific method for performing step 812, refer to step 720b. Details are not described herein again. Step 813: The target EES sends an EAS discovery response message to the EEC, where EAS information carried in the message indicates the one or more EASs that are determined by the target EES and that support the first ACR scenario. The EEC may select the target EAS from the one or more EASs.

For a specific method for performing step 813, refer to step 730b and step 740b. Details are not described herein again.

Step 814: The EEC transfers an application context of the current application from the source EAS to the target EAS via the target EES and the target EAS.

For a specific procedure of step 814, refer to step 620 to step 650. Details are not described herein again.

According to the method shown in FIG. 8, when there is no ACR scenario of the current application, the source EES may indicate, to the EEC, that there is no ACR scenario of the current application, so that the EEC can determine to execute ACR based on the first ACR scenario. When the source EAS cannot provide an application service for the terminal device, the EES that supports the first ACR scenario may be selected as the target EES, the EAS that supports the first ACR scenario may be selected as the target EAS, and ACR is executed via the target EES, so that application context relocation is successfully completed, and continuity of the application service is ensured.

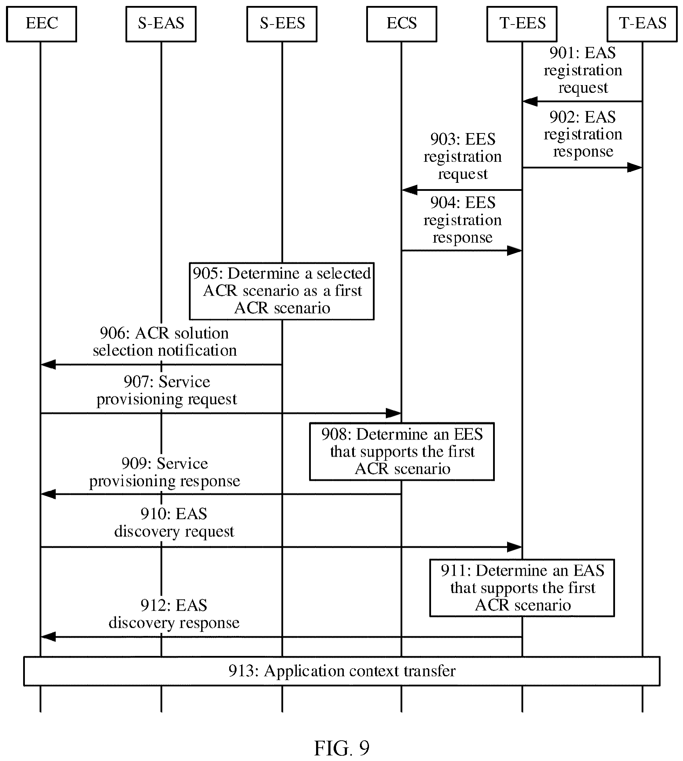

FIG. 9 shows another possible implementation of an application context relocation method according to an embodiment of this application.

In this implementation, a source EES determines a selected ACR scenario as a first ACR scenario, an ECS determines an EES that supports the first ACR scenario, and a target EES determines an EAS that supports the first ACR scenario.

The implementation shown in FIG. 9 includes step 901 to step 913.

Step 901 to step 904 are the same as step 801 to step 804. Details are not described herein again.

Step 905: The source EES determines the selected ACR scenario as the first ACR scenario.

The source EES may determine the first ACR scenario as an ACR scenario corresponding to a current application. For example, when a terminal device, the source EES, and a source EAS have no jointly supported ACR scenario, the selected ACR scenario may be determined as the first ACR scenario.

Step 906: The source EES sends an ACR solution selection notification message to the EEC, where information carried in the message indicates to select the EES that supports the first ACR scenario.

Step 907 to step 913 are the same as step 808 to step 814. Details are not described herein again.

An effect achieved by the implementation shown in FIG. 9 is similar to the effect achieved by the implementation shown in FIG. 8. In addition, in the implementation shown in FIG. 9, the step of determining the selected ACR scenario as the first ACR scenario is performed by the source EES, the step of determining the EES that supports the first ACR scenario is performed by the ECS, and the step of determining the EAS that supports the first ACR scenario is performed by the target EES. In this way, the terminal device does not need to perform these steps, so that load of the terminal device can be reduced.

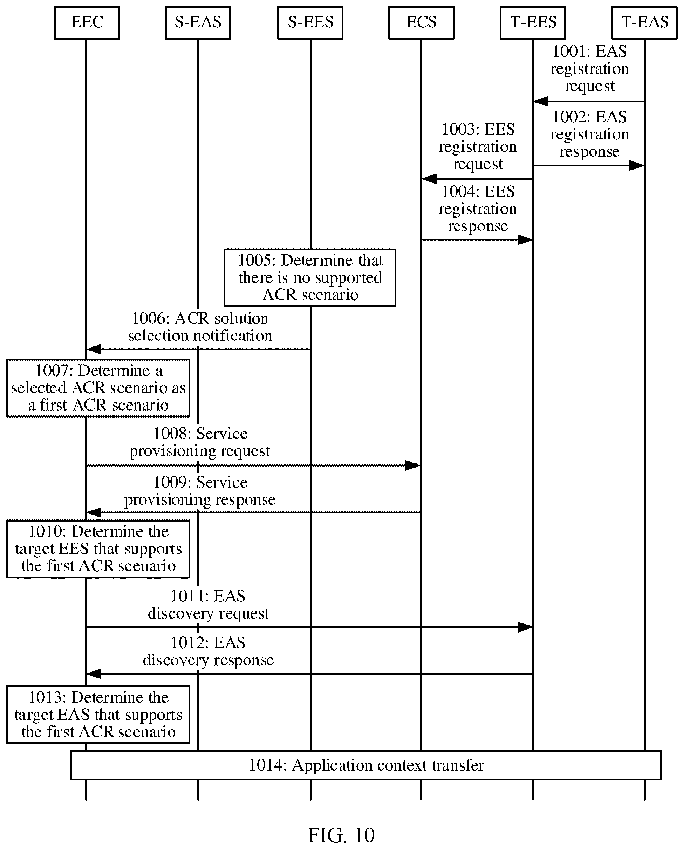

FIG. 10 shows another possible implementation of an application context relocation method according to this application.

In this implementation, an EEC determines a selected ACR scenario as a first ACR scenario, the EEC determines a target EES that supports the first ACR scenario, and the EEC determines a target EAS that supports the first ACR scenario.

The implementation shown in FIG. 10 includes step 1001 to step 1014.

Step 1001 to step 1007 are the same as step 801 to step 807. Details are not described herein again.

Step 1008: The EEC sends a service provisioning request message to an ECS.

Step 1009: The ECS sends a service provisioning response message to the EEC in response to a service provisioning request, where EES information carried in the message indicates one or more EESs, the message further carries information indicating an ACR scenario supported by the one or more EESs, and information carried in the message further indicates an ACR scenario supported by an EAS associated with the EES.

Step 1010: The EEC determines, from the one or more EESs based on the information carried in the service provisioning response message, an EES that supports the first ACR scenario as the target EES.

For more specific descriptions of step 1008 to step 1010, refer to step 410 to step 440. Details are not described herein again.

Step 1011: The EEC sends an EAS discovery request message to the target EES.

Step 1012: The target EES sends an EAS discovery response message to the EEC in response to the EAS discovery request message, where EAS information carried in the message indicates one or more EASs, and the message further carries information indicating an ACR scenario supported by the one or more EASs.

Step 1013: The EEC determines, from the one or more EASs based on the information carried in the EAS discovery response message, an EAS that supports the first ACR scenario as the target EAS.

For more specific descriptions of step 1011 to step 1013, refer to step 710 to step 740. Details are not described herein again.

Step 1014: The EEC transfers an application context of a current application from a source EAS to the target EAS via the target EES and the target EAS.

For a specific procedure of step 1014, refer to step 620 to step 650. Details are not described herein again.

An effect achieved by the implementation shown in FIG. 10 is similar to the effect achieved by the implementation shown in FIG. 8. In addition, in the implementation shown in FIG. 10, the step of determining the selected ACR scenario as the first ACR scenario, the step of determining the target EES that supports the first ACR scenario, and the step of determining the EAS that supports the first ACR scenario are all performed by the EEC. In this way, a source EES, the ECS, and the target EES do not need to perform these steps, so that load of the source EES, the ECS, and the target EES can be reduced.

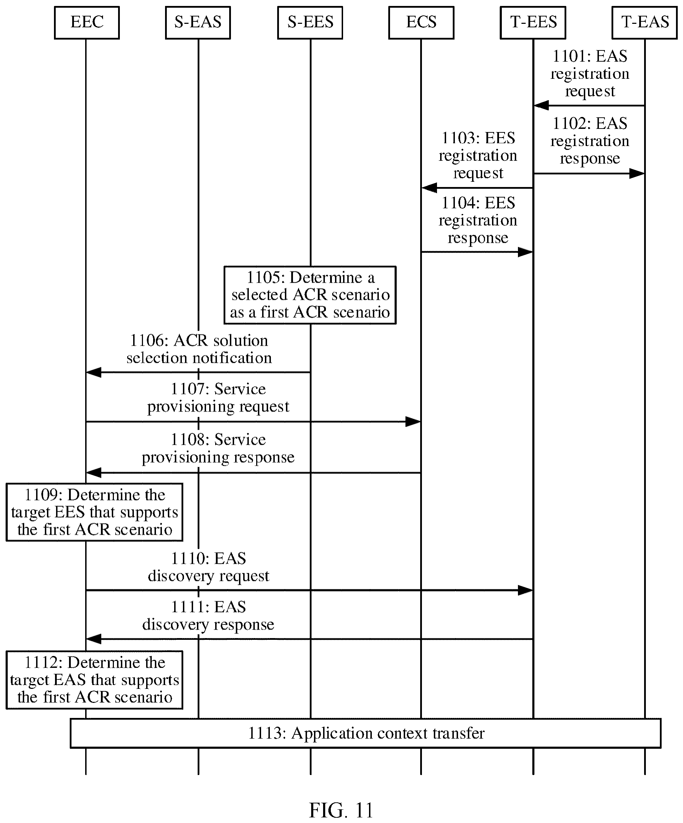

FIG. 11 shows another possible implementation of an application context relocation method according to this application.

In this implementation, a source EES determines a selected ACR scenario as a first ACR scenario, an EEC determines a target EES that supports the first ACR scenario, and the EEC determines a target EAS that supports the first ACR scenario.

The implementation shown in FIG. 11 includes step 1101 to step 1113.

Step 1101 to step 1106 are the same as step 901 to step 906, and step 1107 to step 1113 are the same as step 1008 to step 1014. Details are not described herein again.

An effect achieved by the implementation shown in FIG. 11 is similar to the effect achieved by the implementation shown in FIG. 8.

In this embodiment of this application, the step of determining the selected ACR scenario as the first ACR scenario may be performed by the source EES or may be performed by the EEC. The step of determining the EES that supports the first ACR scenario may be performed by the EEC or may be performed by an ECS. The step of determining the EAS that supports the first ACR scenario may be performed by the EEC or may be performed by the target EES. Entities that specifically perform the foregoing steps may be determined based on load capabilities of the entities, so that system load is balanced, and application context transfer is smoothly implemented.

It should be understood that the implementations shown in FIG. 8 to FIG. 11 are merely examples of the method provided in embodiments of this application, and shall not constitute a limitation on this application. Any variation or replacement readily figured out by a person skilled in the art within the technical scope disclosed in this application shall fall within the protection scope of this application.

In embodiments of this application, the EES may further store an EEC context. The EEC context may be obtained, generated, or created by the EES when the EEC registers with the EES, may be preconfigured, or may be obtained by the EES from another EES by using an EEC context transfer procedure (for example, the target EES may obtain the EEC context from the source EES). This is not limited in this application.

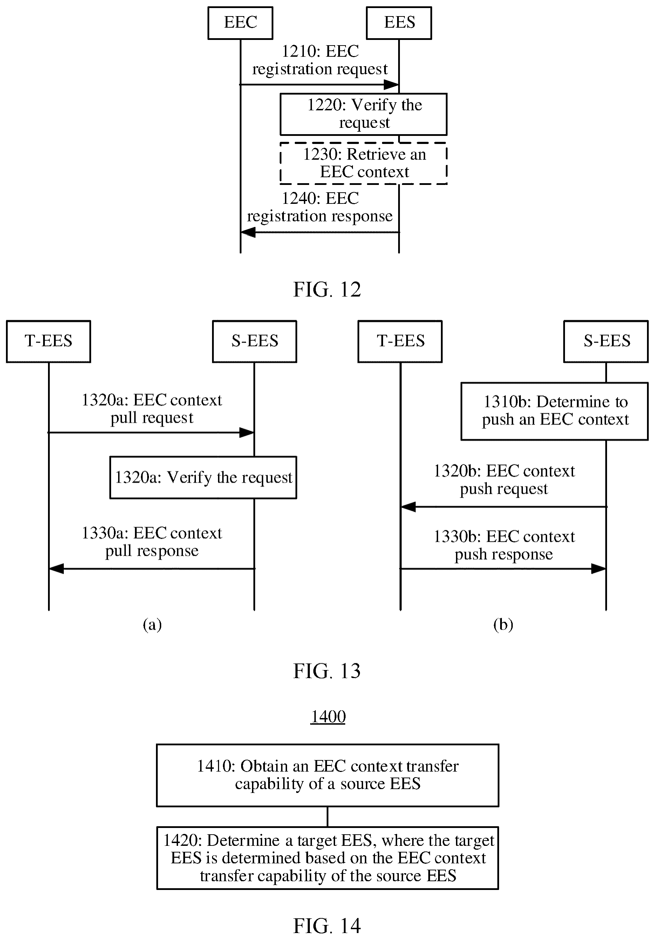

In an example, the following describes an EEC registration procedure with reference to FIG. 12.

Refer to FIG. 12. The EEC registration procedure may include step 1210 to step 1240.

Step 1210: An EEC sends an EEC registration request message to an EES.

The EEC registration request includes a security credential received after an edge computing service is successfully authorized, and may further include recommended expiration time. Optionally, the request may further include information indicating, to the EES, how the EEC expects to use a service of the EES. If permission of the EEC for another EES (for example, a source EES) changes to permission of the EEC for the EES, a request from the EEC may include an identifier and an endpoint of the source EES and an EEC context ID provided by the source EES, to maintain an EEC context and authorize re-positioning of the EEC context.

Step 1220: After receiving the registration request from the EEC, the EES verifies the registration request and verifies the security credential.

The EES may determine whether a requirement specified in an AC profile can be met.

Step 1230: After successfully verifying the request, the EES may retrieve the EEC context from the source EES if the received EEC registration request includes the EEC context ID and the EES ID and the EES endpoint of the source EES. Otherwise, this step is skipped.

Step 1240: The EES sends a registration response message to the EEC.

If the registration succeeds, the EES sends a registration success response. The registration success response includes a registered ID and may include a newly allocated EEC context ID. The EEC stores the new EEC context ID and uses the new EEC context ID when registering with another EES. The EES may further provide expiration time, to indicate, to the EEC, time at which the registration automatically expires. To maintain the registration, the EEC should send a registration update request before the registration expires. If no registration update request is received before the expiration time, the EES should consider that the EEC is implicitly deregistered.

If the registration fails, the EES sends a registration failure response and provides a failure cause.

Specific steps of the procedure shown in FIG. 12 may further be performed with reference to a conventional technology. Details are not described again.

In the method provided in embodiments of this application, in an ACR process, the source EES and the target EES may further perform EEC context transfer.

EEC context transfer may be performed by using an EEC context pull (EEC context push) procedure or an EEC context push (EEC context pull) procedure.

The following schematically describes an EEC context transfer procedure with reference to (a) in FIG. 13 and (b) in FIG. 13.

(a) in FIG. 13 is a diagram of an EEC context pull procedure according to an embodiment of this application. Refer to (a) in FIG. 13. The EEC context pull procedure may include step 1310a to step 1330a.

Step 1310a: A target EES sends an EEC context pull request message to a source EES, to request an EEC context from the source EES. The request message may include an EEC context ID.

Step 1320a: After receiving the EEC context pull request message from the target EES, the source EES verifies a request and verifies a security credential of the requester. The source EES identifies and authorizes, by using the EEC context ID in the request message, the to-be-repositioned EEC context.

Step 1330a: The source EES sends an EEC context pull response message to the target EES. The target EES receives the EEC context from the source EES and stores the EEC context.

(b) in FIG. 13 is a diagram of an EEC context push procedure according to an embodiment of this application. Refer to (b) in FIG. 13. The EEC context push procedure may include step 1310b to step 1330b.

Step 1310b: A source EES determines to forward an EEC context to a target EES for re-positioning. The source EES determines the to-be-forwarded EEC context and the target EES to which the EEC context is to be forwarded.

Step 1320b: The source EES sends an EEC context push request message to the target EES, where the request message includes the determined EEC context.

Step 1330b: After receiving a request from the source EES, the target EES verifies the request and verifies a security credential. The target EES authorizes, by using a provided EEC context ID, storage and management of the EEC context. Then, the target EES sends an EEC context push response message to the source EES, to indicate that the EEC context is successfully received.

Specific steps of the procedures shown in (a) in FIG. 13 and (b) in FIG. 13 may be performed with reference to a conventional technology. Details are not described again.

In an ACR process, the source EES and the target EES may perform EEC context transfer. For example, the EEC context pull procedure shown in (a) in FIG. 13 or the EEC context push procedure shown in (b) in FIG. 13 may be performed when step 630 is performed. It should be understood that specific time for performing the EEC context transfer procedure is not limited in this application. Alternatively, EEC context transfer between the source EES and the target EES may be performed before step 630, or may be performed after step 630.

To implement EEC context transfer, the source EES and the target EES each need to have an EEC context transfer capability. In other words, when having a jointly supported EEC context transfer procedure, the source EES and the target EES can perform EEC context transfer by using the corresponding procedure. For example, when both the source EES and the target EES support the EEC context push procedure, EEC context transfer may be performed between the source EES and the target EES by using the procedure shown in (b) in FIG. 13. When the source EES supports the EEC context push procedure but the target EES does not support the EEC context push procedure, EEC context transfer cannot be performed between the source EES and the target EES by using the EEC context push procedure.

In this embodiment of this application, that the target EES has (or supports) an EEC context transfer capability corresponding to that of the source EES or that the target EES and the source EES each have (or support) a corresponding EEC context transfer capability means that a same EEC context transfer procedure exists in an EEC context transfer procedure supported by the target EES and a context transfer procedure supported by the source EES. For example, both the target EES and the source EES support the EEC context push procedure (the target EES and the source EES support an API for EEC context push), or both the target EES and the source EES support the EEC context pull procedure (the target EES and the source EES support an API for EEC context push).

That both the target EES and the source EES support the EEC context push procedure includes: The source EES supports sending of the EEC context push request message, and the target EES supports sending of the EEC context push response message.

That both the target EES and the source EES support the EEC context pull procedure includes: The target EES supports sending of the EEC context pull request message, and the source EES supports sending of the EEC context pull response message.

In the ACR process, if it is determined that the target EES and the source EES have no jointly supported EEC context transfer solution, EEC context transfer cannot be performed in the ACR process. This may affect service continuity.

When there is no ACR scenario corresponding to a current application, and a target EES obtained by a terminal device via an ECS does not support a first ACR scenario, application context relocation still needs to be executed, to ensure continuity of the application. However, the target EES may not have an EEC context transfer capability corresponding to that of a source EES. In this case, the target EES does not have related information of an EEC. Consequently, the target EES may fail to provide a subsequent edge computing service for the terminal device.

Therefore, embodiments of this application further provide an EEC context transfer method. In an ACR process, when a source EES supports EEC context transfer, a target EES that supports an EEC context transfer procedure corresponding to that supported by the source EES is selected, so that EEC context transfer can be implemented based on the corresponding EEC context transfer procedure in the ACR process. When a source EES does not support EEC context transfer or a target EES does not have an EEC context transfer capability corresponding to that of the source EES, an EEC reregisters with the target EES after ACR is completed.

In this way, the target EES can obtain an EEC context, to provide, for the EEC, information that can be used in an edge computing service. Therefore, the target EES can provide the subsequent edge computing service for the terminal device, to ensure service continuity.

The following describes the EEC context transfer method provided in embodiments of this application with reference to FIG. 14 to FIG. 16.

FIG. 14 is a schematic flowchart of an EEC context transfer method according to an embodiment of this application. The method shown in FIG. 14 is a method provided in an embodiment of this application from a perspective of a terminal device. The method may be performed by the terminal device, or may be performed by a component (for example, a circuit, a chip, or a chip system) in the terminal device, or may be implemented through software and/or hardware. This is not limited in this application. The following uses an EEC configured on the terminal device as an example for description.

For example, as shown in FIG. 14, the EEC context transfer method 1400 may include step 1410 and step 1420.

Step 1410: Obtain an EEC context transfer capability of a source EES.

The EEC may obtain the context transfer capability of the source EES from the source EES. For example, when the source EES is connected to the EEC, the source EES may include, in an ACR solution selection notification message sent to the EEC, API information that is supported by the source EES and that indicates the EEC context transfer capability of the source EES.

For example, the API information may indicate whether the source EES supports EEC context transfer, whether the source EES supports an EEC context pull procedure, or whether the source EES supports an EEC context push procedure.

Step 1420: Determine a target EES, where the target EES is determined based on the EEC context transfer capability of the source EES.

When the source EES supports EEC context transfer, the source EES may send information to the EEC, to indicate, to the EEC, that when ACR is executed, a target EES that supports a corresponding EEC context transfer capability needs to be selected For example, if the source EES supports the EEC context pull procedure, the source EES may indicate, to the EEC, that when ACR is executed, a target EES that supports the EEC context pull procedure needs to be selected.

Correspondingly, the EEC may determine, based on the information from the source EES, that the target EES that supports the corresponding EEC context transfer capability needs to be selected.

The EEC may select, via an ECS based on an EEC context transfer procedure supported by the source EES, the target EES that supports the same EEC context transfer procedure.

When the source EES does not support EEC context transfer, the source EES may send information to the EEC, to indicate, to the EEC, that when ACR is executed, a target EES that does not support EEC context transfer may be selected. The source EES may further indicate, to the EEC, that the EEC needs to reregister with the target EES after ACR is executed.

Correspondingly, the EEC may determine, based on the information from the source EES, that the target EES that does not support EEC context transfer may be selected. The EEC may alternatively determine that the EEC needs to reregister with the target EES after ACR.

The EEC may select a target EES via the ECS. The target EES does not need to support EEC context transfer. The target EES may be determined by using a service provisioning procedure or an EES discovery procedure.

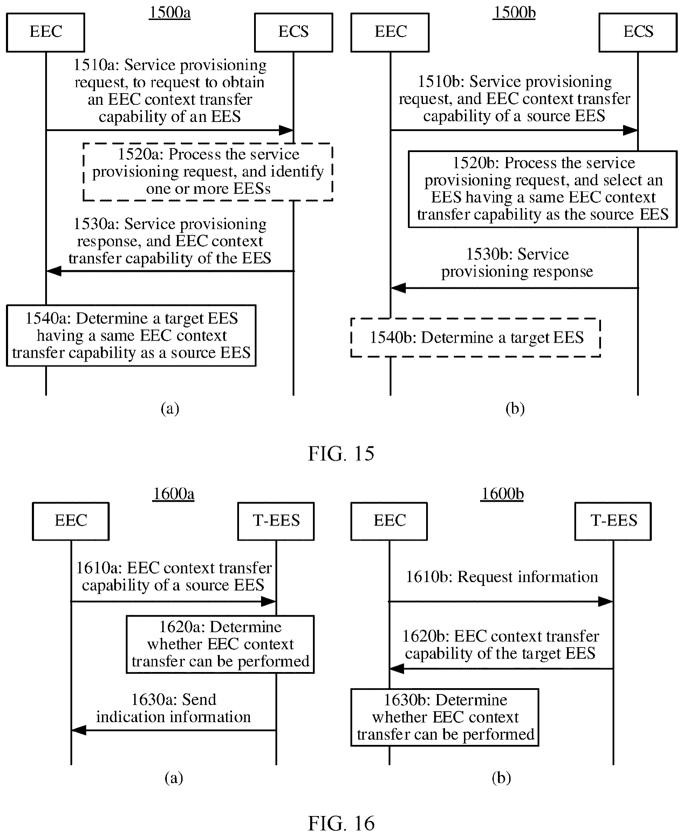

For example, a method for selecting the target EES may be shown in (a) in FIG. 15 or (b) in FIG. 15.

Refer to (a) in FIG. 15. In the method 1500a, the EEC selects the target EES based on the EEC context transfer procedure supported by the source EES. The method 1500a may include step 1510a to step 1540a.

Step 1510a: The EEC may send a service provisioning request message to an ECS.

For a specific implementation method of step 1510a, refer to step 410a or step 410b.

In this embodiment of this application, the EEC may further send first request information to the ECS. The first request information indicates at least one of the following: an EEC context transfer capability of an EES is requested to be obtained; or the source EES supports EEC context transfer.

For example, when the EEC determines that there is no ACR scenario corresponding to an application (and another case), the EEC determines that ACR needs to be executed based on a first ACR scenario. The EEC may send the first request information to the ECS, to request the ECS to send an API capability supported by the EES, to request the ECS to send an EEC context transfer capability supported by the EES, to request the ECS to send whether the EES supports an EEC context pull procedure, or to request the ECS to send whether the EES supports an EEC context push procedure.

Optionally, step 1520a: The ECS processes a service provisioning request and identifies one or more EESs.

For a specific implementation method of step 1520a, refer to step 420a, or refer to step 420b. For example, the one or more EESs identified by the ECS may be EESs that support the first ACR scenario.

Step 1530a: The ECS sends, to the EEC, a service provisioning response message and information indicating the EEC context transfer capability of the EES, for example, the API capability supported by the EES, whether the EES supports the EEC context transfer, an EEC context transfer procedure supported by the EES, whether the EES supports the EEC context pull procedure, or whether the EES supports the EEC context push procedure. For example, the information may be carried in the service provisioning request response message.

The ECS may obtain the information indicating the EEC context transfer capability of the EES. The information may be obtained by the ECS when the EES registers with the ECS, may be obtained by the ECS through a gateway system, or may be preconfigured. For example, in the procedure in which the EES registers with the ECS shown in (b) in FIG. 5, the EES may send, to the ECS, API information supported by the EES. For example, the API information may indicate the EEC context transfer capability of the EES. The information may be carried in the EES registration request message.

For a specific implementation method of step 1530a, refer to step 430a, or refer to step 430b.

In some embodiments, the ECS may send, to the EEC, information about all EESs that register with or are configured on the ECS. In this case, step 1520a is optional.

Step 1540a: The EEC determines, from the one or more EESs, a target EES having an EEC context transfer capability corresponding to that of the source EES.

The information received by the EEC may indicate the EEC context transfer capability of the EES.

When the source EES supports EEC context transfer, the EEC may select an EES that supports the corresponding EEC context transfer procedure as the target EES. For example, if the source EES supports only the EEC context pull procedure, the target EES needs to support the EEC context pull procedure. If the source EES supports only the EEC context push procedure, the target EES needs to support the EEC context push procedure. If the source EES supports both the EEC context pull procedure and the EEC context push procedure, the target EES may support only the EEC context pull procedure or the EEC context push procedure.

When the source EES does not support the EEC context transfer, the EEC may not consider the EEC context transfer capability of the EES when selecting the EES.

In some embodiments, if the source EES supports the EEC context transfer, and there is no EES having an EEC context transfer capability corresponding to that of the source EES in the one or more EESs indicated by the ECS to the EEC or the one or more EESs indicated by the ECS to the EEC do not have the EEC context transfer capability, the target EES selected by the EEC may have a different EEC context transfer capability from the source EES, or the target EES selected by the EEC may not have the EEC context transfer capability. The EEC may determine that the EEC needs to reregister with the target EES after the ACR.

(b) in FIG. 15 is a diagram of still another method for determining a target EES according to an embodiment of this application.

Refer to (b) in FIG. 15. In the method 1500b, an EEC selects, based on an EEC context transfer capability supported by a source EES, an EES that supports a corresponding EEC context transfer capability. The method 1500b may include step 1510b to step 1540b.

Step 1510b: The EEC sends a service provisioning request message to an ECS.

The EEC may send information to the ECS, to indicate the EEC context transfer capability of the source EES. For example, the information may be carried in the service provisioning request message.

For example, if the source EES supports an EEC context pull procedure, the EEC may send information to the ECS, to indicate that the source EES supports the EEC context pull procedure. Alternatively, if the source EES supports an EEC context push procedure, the EEC may send information to the ECS, to indicate that the source EES supports the EEC context push procedure.

The EEC may further send information to the ECS, to indicate at least one of the following: an EES having an EEC context transfer capability needs to be selected; an EES having an EEC context transfer capability corresponding to that of the source EES needs to be selected; or the EES having an EEC context transfer capability corresponding to that of the source EES is preferably selected.

For example, if the source EES supports only the EEC context pull procedure, the EEC may send information to the ECS, to indicate that an EES that supports the EEC context pull procedure needs to be selected. If the source EES supports only the EEC context push procedure, the EEC may send information to the ECS, to indicate that an EES that supports the EEC context push procedure needs to be selected. If the source EES supports both the EEC context pull procedure and the EEC context push procedure, the EEC may send information to the ECS, to indicate that an EES that supports the EEC context pull procedure or an EES that supports only the EEC context push procedure may be selected.

For a specific implementation in which the EEC sends the service provisioning request message to the ECS, refer to step 410a or refer to step 410b.

Step 1520b: The ECS processes a service provisioning request, and selects an EES having the same EEC context transfer capability as the source EES.

Step 1520b may be performed with reference to step 420a or step 420b.

In this embodiment of this application, if the source EES supports EEC context transfer, the ECS may select an EES that supports the EEC context transfer procedure corresponding to that supported by the source EES.

For example, if the information from the EEC indicates that the source EES supports only the EEC context pull procedure, the ECS selects an EES that supports the EEC context pull procedure. If the information from the EEC indicates that the source EES supports only the EEC context push procedure, the ECS selects an EES that supports the EEC context push procedure. If the information from the EEC indicates that the source EES supports both the EEC context pull procedure and the EEC context push procedure, the ECS may select an EES that supports the EEC context pull procedure or an EES that supports the EEC context push procedure.

Optionally, after step 420a or step 420b is performed to select the one or more EESs, an EES that supports the EEC context transfer capability corresponding to that supported by the source EES may be selected based on an EEC context transfer capability supported by the one or more EESs. Alternatively, when step 420a or step 420b is performed to select the one or more EESs, a condition is added, that is, a selected EES needs to support the EEC context transfer capability corresponding to that supported by the source EES. It should be understood that a selection sequence is not limited in this application. In some embodiments, in EESs that register with the ECS or are configured on the ECS, if no EES supports a same EEC context transfer procedure as the source EES, or if the information from the EEC indicates that the source EES does not have the EEC context transfer capability, the ECS may not consider the EEC context transfer capability supported by the EES when selecting the EES.

Step 1530b: The ECS sends a service provisioning response message to the EEC.

In some embodiments, the ECS determines one or more EESs having an EEC context transfer capability corresponding to that of the source EES, and the ECS may send information to the EEC, to indicate the one or more EESs. The information may be carried in the service provisioning response message.

Optionally, the ECS may send information to the EEC, to indicate that the EEC does not need to reregister with the target EES after the ACR. The information may be carried in the service provisioning response message.

In some embodiments, in the EESs that register with the ECS or are configured on the ECS, no EES supports an EEC context transfer procedure corresponding to that supported by the source EES, no EES has the EEC context transfer capability, or the information from the EEC indicates that the source EES does not have the EEC context transfer capability. The ECS may send information to the EEC, to indicate that the EEC needs to reregister with the target EES after the ACR. The information may be carried in the service provisioning response message. For a specific implementation method of step 1530b, refer to step 430a or 430b.

Step 1540b: The EEC determines the target EES from the one or more EESs indicated by the ECS.

In some embodiments, if the one or more EESs indicated by the ECS do not have the EEC context transfer capability corresponding to that of the source EES, or the indicated one or more EESs do not have the EEC context transfer capability, the EEC may determine that the EEC needs to reregister with the target EES after the ACR.

For a specific implementation method of step 1540b, refer to step 440a or 440b. Details are not described again.

In the method 1500b, step 1540b is an optional step.

(a) in FIG. 15 and (b) in FIG. 15 each provide the method for determining the target EES in step 1420. The step of selecting, from the EES, the EES having the same EEC context transfer capability as the source EES may be performed by the ECS, so that the terminal device does not need to perform selection, and load of the terminal device can be reduced. Alternatively, the step may be performed by the EEC, so that the ECS does not need to perform selection based on the EEC context transfer capability of the EES, and load of the ECS can be reduced.

In step 1420, the target EES having the same EEC context transfer capability as the source EES may be determined. In the ACR process, the source EES and the target EES may complete the EEC context transfer. When the determined target EES and the source EES do not have the same EEC context transfer capability, or when the source EES does not support the EEC context transfer, the EEC can obtain an indication of reregistering with the target EES. The EEC may reregister with the target EES based on the indication after the ACR is completed, so that the target EES obtains an EEC context.

Optionally, the method 1400 may further include: determining whether to perform EEC context transfer.

For example, (a) in FIG. 16 and (b) in FIG. 16 provide two methods for determining whether to perform EEC context transfer.

In the method 1600a, a target EES determines whether the EEC context transfer may be performed. The method 1600a includes step 1610a to step 1630a.

Step 1610a: An EEC may send information to the target EES, to indicate an EEC context transfer capability of a source EES. For example, at least one of the following content may be indicated: an API capability supported by the source EES; whether the source EES supports an EEC context transfer procedure; whether the source EES supports an EEC context pull procedure; or whether the source EES supports an EEC context push procedure. It should be understood that this is not limited in this application.

Step 1620a: After receiving the information from the EEC, the target EES may determine, based on the information, whether the EEC context transfer may be performed.

If it is determined that the target EES and the source EES support a corresponding EEC context transfer procedure, for example, both the source EES and the target EES support the EEC context pull procedure and/or both the source EES and the target EES support the EEC context push procedure, it may be determined that the EEC context transfer can be performed with the source EES. The target EES may further determine that the EEC does not need to reregister with the target EES after the ACR.

If it is determined that the target EES and the source EES do not support the corresponding EEC context transfer procedure, the source EES does not support the EEC context transfer, or the target EES does not support the EEC context transfer, the target EES may alternatively determine that the EEC needs to reregister with the target EES after the ACR.

Step 1630a: The target EES sends indication information to the EEC, to indicate whether the EEC needs to reregister with the target EES after the ACR.

If it is determined that the target EES and the source EES support the corresponding EEC context transfer capability, the target EES may send indication information to the EEC, to indicate that the EEC does not need to reregister with the target EES after the ACR.

If it is determined that the target EES and the source EES do not support the same EEC context transfer procedure, the source EES does not support the EEC context transfer, or the target EES does not support the EEC context transfer, the target EES may send indication information to the EEC, to indicate that the EEC needs to reregister with the target EES after the ACR.

The EEC and the target EES may perform the method 1600a when performing the EAS discovery procedure in step 610. For example, the information sent by the EEC to the target EES in step 1610a may be carried in the EAS discovery request message. The indication information in step 1630a may be carried in the EAS discovery response message.

In the method 1600b, the EEC determines whether the EEC context transfer may be performed. The method 1600b includes step 1610b to step 1630b.

Step 1610b: The EEC sends request information to the target EES, where the request information may indicate at least one of the following: an EEC context transfer capability of the target EES is requested to be obtained; or a source EES supports EEC context transfer.

Step 1620b: In response to a request from the EEC, the target EES sends information to the EEC, to indicate the EEC context transfer capability of the target EES. For example, when the target EES supports an EEC context pull procedure, it may indicate that the target EES supports the EEC context pull procedure. When the target EES supports an EEC context push procedure, it may indicate that the target EES supports the EEC context push procedure. When the target EES does not support the EEC context transfer capability, it may indicate that the target EES does not support the EEC context transfer capability. When the target EES has the EEC context transfer capability, it may indicate that the target EES has the EEC context transfer capability.

Step 1630b: The EEC determines, based on the EEC context transfer capability of the target EES, whether the EEC context transfer capability may be performed.

If the target EES and the source EES support a corresponding EEC context transfer capability, it may be determined that the target EES can perform EEC context transfer with the source EES. The EEC may determine that the EEC does not need to reregister with the target EES after the ACR.

If it is determined that the target EES and the source EES do not support the corresponding EEC context transfer capability, the source EES does not support the EEC context transfer, or the target EES does not support the EEC context transfer, the EEC may determine that the target EES cannot perform EEC context transfer with the source EES, and the EEC may further determine that the EEC needs to reregister with the target EES after the ACR.

The EEC and the target EES may perform the method 1600b when performing the EAS discovery procedure in step 610. For example, the information sent by the EEC to the target EES in step 1610b may be carried in the EAS discovery request message. The information sent by the target EES to the EEC in step 1620b may be carried in the EAS discovery response message.

It should be understood that specific time for performing each step in the method 1400 in the ACR process is not limited in this application.

When the method 1600a or the method 1600b is performed, step 1420 is optional. That is, the target EES may be determined by using the method in step 1420, the target EES may be determined by using the method in step 310, or the target EES may be determined by using the method in the conventional technology.

The terminal device may determine the target EES by using the method 1400, and execute ACR. In the ACR process, the source EES and the target EES may perform EEC context transfer, or the EEC may reregister with the target EES after the ACR.

In some embodiments, the source EES and the target EES support the same EEC context transfer capability, and the EEC context transfer may be performed between the source EES and the target EES in the ACR process, for example, the EEC context transfer is performed when step 630 is performed.

For example, when the source EES and the target EES jointly support an EEC context push procedure, the EEC context transfer may be performed between the source EES and the target EES by using the process shown in (b) in FIG. 13. When the source EES and the target EES jointly support an EEC context pull procedure, the EEC context transfer may be performed between the source EES and the target EES by using the process shown in (a) in FIG. 13.

In some embodiments, the source EES and/or the target EES do/does not support the EEC context transfer, or the source EES and the target EES each do not have the corresponding EEC context transfer capability. The EEC may register with the target EES after the ACR. For a method for registering the EEC with the target EES, refer to the method in FIG. 12. Details are not described herein again.

Based on the technical solution, when determining the target EES, the EEC may indicate the ECS to select an EES that supports an EEC context transfer capability corresponding to that supported by the source EES, so that the target EES determined by the EEC can transfer an EEC context with the source EES. The ECS may alternatively indicate an EEC context transfer capability of an EES to the EEC, so that the EEC can select a target EES that supports an EEC context transfer capability corresponding to that supported by the source EES. In this way, in the ACR process, the source EES and the target EES can perform EEC context transfer smoothly. When the source EES does not support the EEC context transfer, the target EES does not support the EEC context transfer, or the source EES and the target EES do not have a corresponding EEC context transfer capability, the EEC may reregister with the target EES based on an indication, so that the target EES can obtain an EEC context and provide, for the EEC, information that can be used in an edge computing service. Therefore, the target EES can provide the subsequent edge computing service for the terminal device, to ensure service continuity.

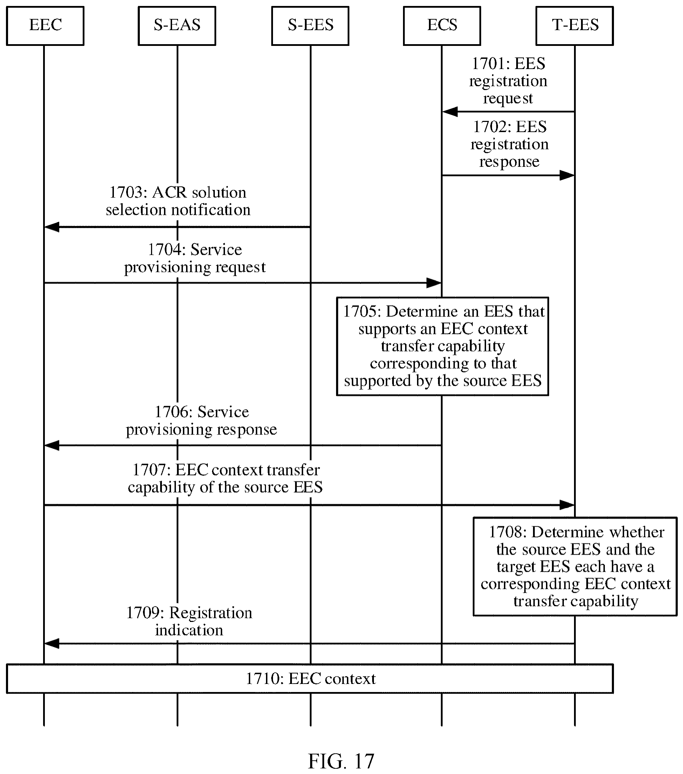

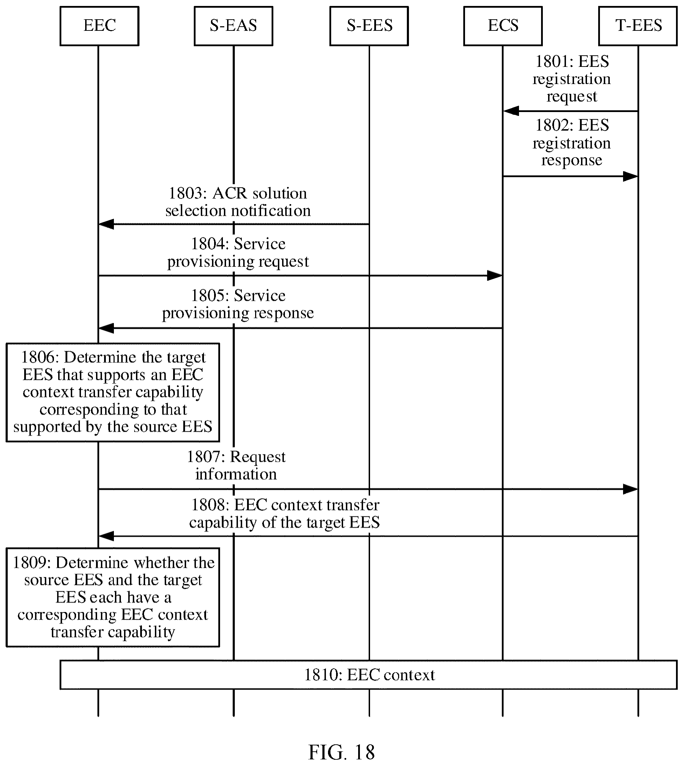

In an example, the following describes, with reference to FIG. 17 and FIG. 18, several possible implementations of the EEC context transfer method provided in embodiments of this application.

FIG. 17 shows a possible implementation of an EEC context relocation method according to an embodiment of this application. In the method shown in FIG. 17, a step of determining an EES that supports an EEC context transfer capability corresponding to that supported by a source EES may be performed by an ECS, and a step of determining whether the source EES and a target EES each have a corresponding EEC context transfer capability may be performed by the target EES. Refer to FIG. 17. The method includes step 1701 to step 1710.

Step 1701: The target EES sends an EES registration request message to the ECS, where information carried in the EES registration request message indicates the EEC context transfer capability of the EES.

Step 1702: The ECS sends an EES registration response message to the target EES.

For a specific method for the target EES to register with the ECS shown in step 1701 and step 1702, refer to the method shown in (b) in FIG. 5. Details are not described herein again.

Step 1701 and step 1702 are optional steps.

It should be understood that, based on the steps, the source EES may also register with the ECS. Based on the registration procedure, the ECS may determine the EEC context transfer capability of the source EES and/or the target EES.

Step 1703: The source EES sends an ACR solution selection notification message to an EEC, where the message may carry an AC ID an EAS ID that are of a current application, and information indicating the EEC context transfer capability of the source EES.

Optionally, the EEC or the source EES may determine an ACR scenario.

For a specific method for performing step 1703, refer to step 1410. Details are not described herein again.

Step 1704: The EEC sends a service provisioning request message to the ECS, where the message carries information that may indicate at least one of the following content: an EES having an EEC context transfer capability needs to be selected; an EES having an EEC context transfer capability corresponding to that of the source EES needs to be selected; or the EES having the EEC context transfer capability corresponding to that of the source EES is preferably selected.

Step 1705: The ECS determines the EES that supports the EEC context transfer capability corresponding to that supported by the source EES.

For a specific implementation of step 1705, refer to step 1520b. Details are not described herein again.

Step 1706: The ECS sends a service provisioning response message to the EEC, where the message may carry information indicating one or more EESs having the EEC context transfer capability corresponding to that of the source EES. The EEC may determine the target EES from the one or more EESs.

Optionally, if the EES determined by the ECS does not have the EEC context transfer capability corresponding to that of the source EES, the message may carry information indicating that the EEC needs to reregister with the target EES.

For a specific implementation of step 1706, refer to step 1530b. Details are not described herein again.

Step 1707: The EEC sends information to the target EES, to indicate the EEC context transfer capability of the source EES.

For a specific implementation of step 1707, refer to step 1610a. Details are not described herein again.

Step 1708: The target EES determines whether the source EES and the target EES each have a corresponding EEC context transfer capability.

For a specific implementation of step 1708, refer to step 1620a. Details are not described herein again.

Step 1709: The target EES sends registration indication information to the EEC, to indicate whether the EEC needs to reregister with the target EES.

For a specific implementation of step 1708, refer to step 1630a. Details are not described herein again.

Step 1710: The target EES transfers an EEC context with the source EES, or the EEC registers with the target EES.

If the target EES and the source EES support the corresponding EEC context transfer capability, the target EES and the source EES may perform EEC context transfer by using a jointly supported EEC context transfer procedure. For a specific implementation, refer to (a) in FIG. 13 or (b) in FIG. 13. Details are not described herein again.

If the target EES and the source EES do not support the corresponding EEC context transfer capability, the source EES does not support the EEC context transfer, or the target EES does not support the EEC context transfer, the EEC may reregister with the target EES, so that the target EES may obtain the EEC context. For a specific implementation, refer to FIG. 12. Details are not described herein again.

It should be understood that when the target EES is determined by using the method in step 1704 to step 1706, step 1707 to step 1709 are optional steps. When step 1707 to step 1709 are performed, step 1704 to step 1706 are optional steps. That is, the target EES may be determined by using another method. For example, the target EES is determined based on the method in step 310, or the target EES is determined based on the conventional technology.

It should be further understood that, in step 1703, if the information sent by the source EES to the EEC indicates that the source EES does not support the EEC context transfer, the EEC may determine that the EEC needs to reregister with the target EES. In this case, step 1704 to step 1709 are optional steps. In step 1710, the EEC registers with the target EES, and the target EES obtains the EEC context.

In this way, the target EES can obtain the EEC context, to provide, for the EEC, information that can be used in an edge computing service. Therefore, the target EES can provide the subsequent edge computing service for the terminal device, to ensure service continuity.

FIG. 18 shows another possible implementation of an application context relocation method according to an embodiment of this application. In the method shown in FIG. 18, a step of determining a target EES that supports an EEC context transfer capability corresponding to that supported by a source EES may be performed by an EEC, and a step of determining whether the source EES and the target EES each have a corresponding EEC context transfer capability may be performed by the target EEC. Refer to FIG. 18. The method includes step 1801 to step 1810.

An implementation of step 1801 to step 1803 is the same as the implementation of step 1701 to step 1703. Details are not described herein again.

Step 1804: The EEC sends a service provisioning request message to the ECS, where the message carries information indicating at least one of the following: the EEC context transfer capability of the EES is requested to be obtained; or the source EES supports EEC context transfer.

For a specific implementation of step 1804, refer to step 1510a. Details are not described herein again.

Step 1805: The ECS sends a service provisioning response message to the EEC, where the message may carry information indicating one or more EESs and an EEC context transfer capability of the one or more EESs.

For a specific implementation of step 1805, refer to step 1520a and step 1530a. Details are not described herein again.

Step 1806: The EEC determines a target EES that supports an EEC context transfer capability corresponding to that supported by the source EES. The EEC may select, based on the EEC context transfer capability of the EES, an EES that supports the EEC context transfer capability corresponding to that supported by the source EES as the target EES from the one or more EESs indicated by the ECS.

For a specific implementation of step 1805, refer to step 1540a. Details are not described herein again.

Step 1807: The EEC sends request information to the target EES, to indicate at least one of the following: the EEC context transfer capability of the target EES is requested to be obtained; or the source EES supports the EEC context transfer.

Step 1808: The target EES sends information to the EES, to indicate the EEC context transfer capability of the target EES.

For a specific implementation of step 1808, refer to step 1620b. Details are not described herein again.

Step 1809: The EEC determines whether the source EES and the target EES each have a corresponding EEC context transfer capability.

For a specific implementation of step 1809, refer to step 1630b. Details are not described herein again.

Step 1810: The target EES transfers an EEC context with the source EES, or the EEC registers with the target EES.

If the target EES and the source EES support the corresponding EEC context transfer capability, the target EES and the source EES may perform EEC context transfer by using a jointly supported EEC context transfer procedure. For a specific implementation, refer to (a) in FIG. 13 or (b) in FIG. 13. Details are not described herein again.

If the target EES and the source EES do not support the corresponding EEC context transfer capability, the source EES does not support the EEC context transfer, or the target EES does not support the EEC context transfer, the EEC may reregister with the target EES, so that the target EES may obtain the EEC context. For a specific implementation, refer to FIG. 12. Details are not described herein again.

It should be understood that when the target EES is determined by using the method in step 1804 to step 1806, step 1807 to step 1809 are optional steps. When step 1807 to step 1809 are performed, step 1804 to step 1806 are optional steps. That is, the target EES may be determined by using another method. For example, the target EES is determined based on the method in step 310, or the target EES is determined based on the conventional technology.

It should be further understood that, in step 1803, if the information sent by the source EES to the EEC indicates that the source EES does not support the EEC context transfer, the EEC may determine that the EEC needs to reregister with the target EES. In this case, step 1804 to step 1809 are optional steps. In step 1810, the EEC registers with the target EES, and the target EES obtains the EEC context.

In this way, the target EES can obtain the EEC context, to provide, for the EEC, information that can be used in an edge computing service. Therefore, the target EES can provide the subsequent edge computing service for the terminal device, to ensure service continuity.

It should be understood that the steps in FIG. 17 and FIG. 18 may be implemented in combination. For example, after step 1704 to step 1706 are performed, step 1807 to step 1809 may be performed; or after step 1804 to step 1806 are performed, step 1707 to step 1709 may be performed. This is not limited in this application.

It should be further understood that the EEC context transfer method provided in embodiments of this application may be implemented with reference to the ACR method in FIG. 3 to FIG. 11. For specific steps, refer to the descriptions in FIG. 3 to FIG. 11. This is not limited in this application.

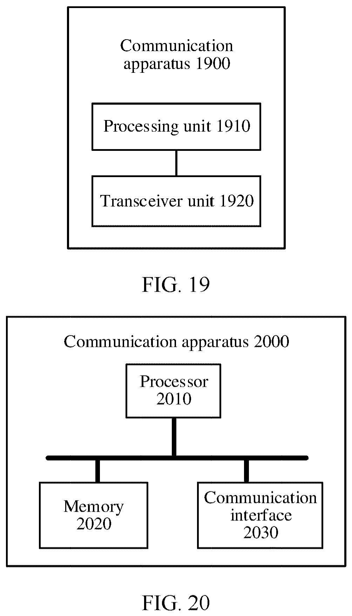

The foregoing describes in detail the methods provided in embodiments of this application with reference to FIG. 3 to FIG. 18. The following describes apparatuses provided in embodiments of this application with reference to FIG. 19 and FIG. 20.

FIG. 19 is a block diagram of a communication apparatus according to an embodiment of this application. As shown in FIG. 19, the communication apparatus may include a processing unit 1910 and a transceiver unit 1920.

Optionally, the communication apparatus 1900 may correspond to the terminal device (including the EEC or the AC) in the foregoing method embodiments, for example, may be a terminal device, or a component (for example, a chip, a chip system, or a processor) configured in the terminal device, or may be a logical module or software that can implement all or some functions of the terminal device. This is not limited in embodiments of this application.

When the apparatus 1900 corresponds to the terminal device, the apparatus 1900 may be configured to perform the steps performed by the terminal device in the methods shown in FIG. 3 to FIG. 18, for example, perform the steps performed by the EEC. The communication apparatus 1900 may include units configured to perform the method performed by the terminal device (including the EEC) in the methods shown in FIG. 3 to FIG. 18. In addition, the units in the communication apparatus 1900 and the foregoing other operations and/or functions are separately intended to implement corresponding procedures of the methods shown in FIG. 3 to FIG. 18.

In an example, the processing unit 1910 is configured to determine a target EES. The target EES is an EES that supports a first ACR scenario, and the first ACR scenario is a scenario in which the target EES executes ACR. The transceiver unit 1920 is configured to request the target EES to execute ACR.

In some embodiments, the transceiver unit 1920 is further configured to receive EES information from an ECS. The EES information indicates at least one EES. The processing unit 1910 is specifically configured to determine the target EES based on the EES information.

Optionally, the transceiver unit 1920 is further configured to receive first information from the ECS. The first information indicates an ACR capability of the at least one EES.

Optionally, the at least one EES supports the first ACR scenario.

Optionally, the transceiver unit 1920 is further configured to send second information to the ECS. The second information indicates at least one of the following: the target EES that supports the first ACR scenario is to be selected; a currently connected EES or a currently connected application instance EAS cannot execute ACR; a current application has no corresponding ACR scenario; or an ACR capability of an EES is requested to be obtained.

In some embodiments, the processing unit 1910 is further configured to: when the current application has no corresponding ACR scenario, or when the currently connected EES or the currently connected EAS can execute ACR, determine to execute ACR based on the first ACR scenario.

Optionally, the transceiver unit 1920 is further configured to receive third information from the currently connected EES. The third information indicates that the current application has no corresponding ACR scenario, or indicates that the currently connected EES or the currently connected EAS cannot execute ACR.

In some embodiments, the transceiver unit 1920 is further configured to receive fourth information from a currently connected EES. The fourth information indicates to select the target EES that supports the first ACR scenario, or indicates that the first ACR scenario is an ACR scenario corresponding to the current application.

In some embodiments, the transceiver unit 1920 is further configured to receive EAS information from the target EES. The EAS information indicates at least one EAS. The processing unit 1910 is further configured to determine a target EAS based on the EAS information.

Optionally, the transceiver unit 1920 is further configured to receive fifth information from the target EES. The fifth information indicates an ACR capability of the at least one EAS.

Optionally, the at least one EAS supports the first ACR scenario.

Optionally, the transceiver unit 1920 is further configured to send sixth information to the target EES. The sixth information indicates at least one of the following: the target EAS that supports the first ACR scenario is selected; a source EES or the source EAS cannot execute ACR; a current application has no corresponding ACR scenario; or the ACR capability of the EAS is requested to be obtained.

It should be understood that when the communication apparatus 1900 is the terminal device, the transceiver unit 1920 in the communication apparatus 1900 may be implemented through a communication interface, for example, may correspond to a communication interface 2030 in a communication apparatus 2000 shown in FIG. 20. The processing unit 1910 in the communication apparatus 1900 may be implemented by using at least one processor, for example, may correspond to a processor 2010 in the communication apparatus 2000 shown in FIG. 20.

Optionally, the communication apparatus 1900 may correspond to the ECS in the foregoing method embodiments, for example, may be an ECS, or a component (for example, a chip, a chip system, or a processor) configured in the ECS, or may be a logical module or software that can implement all or some functions of the ECS. This is not limited in embodiments of this application.

When the apparatus 1900 corresponds to the ECS, the apparatus 1900 may be configured to perform the steps performed by the ECS in the methods shown in FIG. 3 to FIG. 18. The communication apparatus 1900 may include units configured to perform the method performed by the ECS in the methods shown in FIG. 3 to FIG. 18. In addition, the units in the communication apparatus 1900 and the foregoing other operations and/or functions are separately intended to implement corresponding procedures of the methods shown in FIG. 3 to FIG. 18.

In an example, the transceiver unit 1920 is configured to send EES information to a terminal device. The EES information indicates at least one EES. The transceiver unit 1920 is further configured to send first information to the terminal device. The first information indicates an ACR capability of the at least one EES.

Optionally, the transceiver unit 1920 is further configured to receive second information from the terminal device. The second information indicates to request to obtain an ACR capability of an EES.

As still another example, the processing unit 1910 is configured to determine at least one EES that supports a first ACR scenario. The first ACR scenario is a scenario in which a target EES executes ACR. The transceiver unit 1920 is configured to send EES information to the terminal device. The EES information indicates the at least one EES.

Optionally, the transceiver unit 1920 is further configured to receive second information from the terminal device. The second information indicates at least one of the following: a target EES that supports a target ACR scenario is to be selected; a currently connected EES or a currently connected EAS cannot execute ACR; or a current application has no corresponding ACR scenario.

It should be understood that when the communication apparatus is the ECS, the transceiver unit 1920 in the communication apparatus 1900 may be implemented through a communication interface, for example, may correspond to a communication interface 2030 in a communication apparatus 2000 shown in FIG. 20. The processing unit 1910 in the communication apparatus 1900 may be implemented by using at least one processor, for example, may correspond to a processor 2010 in the communication apparatus 2000 shown in FIG. 20.

Optionally, the communication apparatus 1900 may correspond to the EES (including the source EES or the target EES) in the foregoing method embodiments, for example, may be an EES, or a component (for example, a chip, a chip system, or a processor) configured in the EES, or may be a logical module or software that can implement all or some functions of the EES. This is not limited in embodiments of this application.

When the apparatus 1900 corresponds to the EES, the apparatus 1900 may be configured to perform steps performed by the EES in the methods shown in FIG. 3 to FIG. 18, for example, perform steps performed by the source EES, or perform steps performed by the target EES. The communication apparatus 1900 may include units configured to perform the method performed by the EES in the methods shown in FIG. 3 to FIG. 18. In addition, the units in the communication apparatus 1900 and the foregoing other operations and/or functions are separately intended to implement corresponding procedures of the methods shown in FIG. 3 to FIG. 18.

In an example, the processing unit 1910 is configured to determine that a current application has no corresponding ACR scenario. The transceiver unit 1920 is configured to send third information to a terminal device. The third information indicates that the current application has no corresponding ACR scenario, or indicates that an EES or an EAS associated with the EES cannot execute ACR.

As still another example, the processing unit 1910 is configured to determine to execute ACR based on a first ACR scenario. The first ACR scenario is a scenario in which a target EES executes ACR. The transceiver unit 1920 is configured to send fourth information to the terminal device. The fourth information indicates to select the target EES that supports the first ACR scenario, or indicates that the first ACR scenario is an ACR scenario corresponding to the current application.

Optionally, before the processing unit 1910 determines to execute ACR based on the first ACR scenario, the processing unit 1910 is further configured to determine that the current application has no corresponding ACR scenario.

As still another example, the transceiver unit 1920 is configured to send EAS information to a terminal device. The EAS information indicates at least one EAS. The transceiver unit 1920 is further configured to send fifth information to the terminal device. The fifth information indicates an ACR capability of the at least one EAS.

Optionally, the transceiver unit 1920 is further configured to receive sixth information from the terminal device. The sixth information indicates to request to obtain the ACR capability of the EAS.

As still another example, the processing unit 1910 is configured to determine at least one EAS that supports a first ACR scenario. The first ACR scenario is a scenario in which a target EES executes ACR. The transceiver unit 1920 is configured to send EAS information to a terminal device. The EAS information indicates the at least one EAS.

Optionally, the transceiver unit 1920 is further configured to receive sixth information from the terminal device. The sixth information indicates at least one of the following: a target EAS that supports the first ACR scenario is to be selected; a source EES and a source EAS cannot execute ACR; or a current application has no corresponding ACR scenario.

It should be understood that when the communication apparatus is the EES, the transceiver unit 1920 in the communication apparatus 1900 may be implemented through a communication interface, for example, may correspond to a communication interface 2030 in a communication apparatus 2000 shown in FIG. 20. The processing unit 1910 in the communication apparatus 1900 may be implemented by using at least one processor, for example, may correspond to a processor 2010 in the communication apparatus 2000 shown in FIG. 20.

FIG. 20 is another block diagram of a communication apparatus according to an embodiment of this application. As shown in FIG. 20, the apparatus 2000 includes at least one processor 2010. The at least one processor 2010 may be configured to implement functions of the terminal device (including the EEC and the like), the ECS, or the EES (including the source EES or the target EES) in the methods provided in embodiments of this application.

The communication apparatus 2000 may further include at least one memory 2020, configured to store program instructions and/or data. The memory 2020 is coupled to the processor 2010. The coupling in this embodiment of this application may be an indirect coupling or a communication connection between apparatuses, units, or modules in an electrical form, a mechanical form, or another form, and is used for information exchange between the apparatuses, the units, or the modules. The processor 2010 may cooperate with the memory 2020. The processor 2010 may execute the program instructions stored in the memory 2020. At least one of the at least one memory may be included in the processor.

The communication apparatus 2000 may further include a communication interface 2030, configured to communicate with another device through a transmission medium, so that an apparatus in the communication apparatus 2000 can communicate with the another device. For example, when the communication apparatus 2000 is configured to implement the functions of the terminal device in the method provided in embodiments of this application, the another device may include the ECS and the EES. The communication interface 2030 may be, for example, a transceiver, an interface, a bus, a circuit, or an apparatus that can implement a transceiver function. The processor 2010 may receive and send data and/or information through the communication interface 2030, and is configured to implement the method performed by the terminal device, the ECS, or the EES in embodiments corresponding to FIG. 3 to FIG. 18.

For example, when the apparatus 2000 is configured to implement the functions of the terminal device in the method provided in embodiments of this application, the processor 2010 may be configured to determine a target EES. The target EES is an EES that supports a first ACR scenario, and the first ACR scenario is a scenario in which the target EES executes ACR. The processor is further configured to control the communication interface 2030 to request the target EES to execute ACR.

For another example, when the apparatus 2000 is configured to implement the functions of the ECS in the method provided in embodiments of this application, the processor 2010 may be configured to control the communication interface 2030 to send EES information to the terminal device. The EES information indicates at least one EES.

For another example, when the apparatus 2000 is configured to implement the functions of the EES in the method provided in embodiments of this application, the processor 2010 may be configured to determine that a current application has no corresponding ACR scenario, and may be further configured to control the communication interface 2030 to send third information to the terminal device. The third information indicates that the current application has no corresponding ACR scenario, or indicates that an EES or an EAS associated with the EES cannot execute ACR.

It should be understood that a specific process in which the units perform the corresponding steps is described in detail in the foregoing method embodiments, and for brevity, details are not described herein.

A specific connection medium between the processor 2010, the memory 2020, and the communication interface 2030 is not limited in embodiments of this application.

It should be noted that the foregoing method embodiments may be applied to a processor, or implemented by the processor. The processor may be an integrated circuit chip and has a signal processing capability. In an implementation process, steps in the foregoing method embodiments can be implemented by using a hardware integrated logical circuit in the processor, or by using instructions in a form of software. The processor may be a general-purpose processor, a DSP, an ASIC, an FPGA, another programmable logical device, a discrete gate or transistor logic device, or a discrete hardware component. It may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

A memory in embodiments of this application may be a volatile memory or a nonvolatile memory, or may include both a volatile memory and a nonvolatile memory. The nonvolatile memory may be a ROM, a PROM, an EPROM, an EEPROM, or a flash memory. The volatile memory may be a RAM, and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a chip system. The chip system includes at least one processor, configured to implement functions related to the method performed by the terminal device, the ECS, or the EES (including the source EES or the target EES) in embodiments shown in FIG. 3 to FIG. 16, for example, receive or process data and/or information related to the foregoing methods.

In a possible design, the chip system further includes a memory. The memory is configured to store program instructions and data, and the memory is located inside or outside the processor.

The chip system may include a chip, or may include a chip and another discrete component.

This application further provides a communication system, including at least one of a source EES and a target EES. The source EES may implement functions related to the source EES in the foregoing method embodiments, and the target EES may implement functions related to the target EES in the foregoing method embodiments.

Optionally, the communication system further includes an ECS. The ECS may implement functions related to the ECS in the foregoing method embodiments.

Optionally, the communication system further includes a terminal device. The terminal device may implement functions related to the terminal device in the foregoing method embodiments, for example, may implement functions related to the EEC.

This application further provides a computer program product. The computer program product includes a computer program (which may also be referred to as code or instructions). When the computer program is run, a computer is enabled to perform the method performed by the terminal device, the ECS, or the EES (including the source EES or the target EES) in embodiments shown in FIG. 3 to FIG. 16.

This application further provides a computer-readable storage medium. The computer-readable storage medium stores a computer program (which may also be referred to as code or instructions). When the computer program is run, a computer is enabled to perform the method performed by the terminal device, the ECS, or the EES (including the source EES or the target EES) in embodiments shown in FIG. 3 to FIG. 16.

All or some of the methods provided in the foregoing embodiments may be implemented by software, hardware, firmware, or any combination thereof. When the software is used to implement embodiments, all or a part of embodiments may be implemented in a form of a computer program product. The computer program product may include one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a DVD), a semiconductor medium (for example, a solid-state drive solid state disk (SSD))

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An application context relocation method, applied to a terminal device, wherein the method comprises:
sending second information to an edge configuration server ECS, wherein the second information indicates to select an edge enabler server EES that supports an application context relocation ACR scenario;
receiving EES information from the ECS, wherein the EES information indicates at least one EES that supports the ACR scenario;
determining a target EES based on the EES information, wherein the target EES is an EES in the at least one EES that supports the ACR scenario; and
requesting the target EES to execute ACR, so that the terminal device relocates an application context of the terminal device from a source edge application server EAS of the terminal device to a target EAS of the terminal device via the target EES.

2. The method according to claim 1, wherein the ACR scenario is a scenario in which the terminal device relocates the application context of the terminal device from the source EAS of the terminal device to the target EAS of the terminal device via the EES that supports the ACR scenario.

3. The method according to claim 2, wherein the method further comprises:
receiving first information from the ECS, wherein the first information indicates an ACR capability of the at least one EES.

4. The method according to any one of claims 1 to 3, wherein the method further comprises:
when a current application has no corresponding ACR scenario, or when a currently connected EES or a currently connected EAS cannot execute ACR, determining to execute ACR based on the ACR scenario.

5. The method according to claim 4, wherein the method further comprises:
receiving third information from the currently connected EES, wherein the third information indicates that the current application has no corresponding ACR scenario, or indicates that the currently connected EES or the currently connected EAS cannot execute ACR.

6. The method according to any one of claims 1 to 3, wherein before the determining a target EES, the method further comprises:
receiving fourth information from a currently connected EES, wherein the fourth information indicates to select the target EES that supports the ACR scenario, or indicates that the ACR scenario is an ACR scenario corresponding to a current application.

7. The method according to any one of claims 1 to 6, wherein the method further comprises:
receiving EAS information from the target EES, wherein the EAS information indicates at least one EAS; and
determining the target EAS based on the EAS information.

8. The method according to claim 7, wherein the method further comprises:
receiving fifth information from the target EES, wherein the fifth information indicates an ACR capability of the at least one EAS.

9. The method according to claim 7 or 8, wherein the at least one EAS supports the ACR scenario.

10. The method according to any one of claims 7 to 9, wherein the method further comprises:
sending sixth information to the target EES, wherein the sixth information indicates at least one of the following:
the target EAS that supports the ACR scenario is to be selected;
a source EES or the source EAS cannot execute ACR;
the current application has no corresponding ACR scenario; or
the ACR capability of the EAS is requested to be obtained.

11. A communication method, applied to an edge configuration server ECS, wherein the method comprises:
receiving second information from a terminal device, wherein the second information indicates to select an edge enabler server EES that supports an application context relocation ACR scenario; and
sending EES information to the terminal device, wherein the EES information indicates at least one EES that supports the ACR scenario.

12. The method according to claim 11, wherein the ACR scenario is a scenario in which the terminal device relocates an application context of the terminal device from a source edge application server EAS of the terminal device to a target EAS of the terminal device via the EES that supports the application context relocation scenario.

13. The method according to claim 12, wherein the method further comprises:
sending first information to the terminal device, wherein the first information indicates an ACR capability of the at least one EES.

14. A communication method, applied to an edge configuration server ECS, wherein the method comprises:
determining at least one edge enabler server EES that supports an application context relocation ACR scenario, wherein the ACR scenario is a scenario in which a target EES executes ACR; and
sending EES information to a terminal device, wherein the EES information indicates the at least one EES.

15. The method according to claim 14, wherein the method further comprises: sending first information to the terminal device, wherein the first information indicates an ACR capability of the at least one EES.

16. The method according to claim 14 or 15, wherein the method further comprises:
receiving second information from the terminal device, wherein the second information indicates at least one of the following:
a target EES that supports a target ACR scenario is to be selected;
a currently connected EES or a currently connected edge application server EAS cannot execute ACR; or
a current application has no corresponding ACR scenario.

17. A communication method, applied to an edge enabler server EES, wherein the method comprises:
determining that a current application has no corresponding application context relocation ACR scenario; and
sending third information to a terminal device, wherein the third information indicates that the current application has no corresponding ACR scenario, or indicates that the EES or a currently connected edge application server EAS cannot execute ACR.

18. A communication method, applied to an edge enabler server EES, wherein the method comprises:
determining to execute ACR based on an application context relocation ACR scenario, wherein the ACR scenario is a scenario in which a target EES executes ACR; and
sending fourth information a terminal device, wherein the fourth information indicates to select the target EES that supports the ACR scenario, or indicates that the ACR scenario is an ACR scenario corresponding to a current application.

19. The method according to claim 18, wherein before the determining to execute ACR based on an ACR scenario, the method further comprises:
determining that the current application has no corresponding ACR scenario.

20. A communication method, applied to an edge enabler server EES, wherein the method comprises:
sending edge application server EAS information to a terminal device, wherein the EAS information indicates at least one EAS; and
sending fifth information to the terminal device, wherein the fifth information indicates an application context relocation ACR capability of the at least one EAS.

21. The method according to claim 20, wherein the method further comprises:
receiving sixth information from the terminal device, wherein the sixth information indicates to request to obtain the ACR capability of the EAS.

22. A communication method, applied to an edge enabler server EES, wherein the method comprises:
determining at least one edge application server EAS that supports an application context relocation ACR scenario, wherein the ACR scenario is a scenario in which a target EES executes ACR; and
sending EAS information to a terminal device, wherein the EAS information indicates the at least one EAS.

23. The method according to claim 22, wherein the method further comprises: sending fifth information to the terminal device, wherein the fifth information indicates an ACR capability of the at least one EAS.

24. The method according to claim 22 or 23, wherein the method further comprises:
receiving sixth information from the terminal device, wherein the sixth information indicates at least one of the following:
a target EAS that supports the ACR scenario is to be selected;
a source EES and a source EAS cannot execute ACR; or
a current application has no corresponding ACR scenario.

25. A communication apparatus, configured to implement the method according to any one of claims 1 to 10, configured to implement the method according to any one of claims 11 to 16, configured to implement the method according to any one of claims 17 to 19, or configured to implement the method according to any one of claims 20 to 24.

26. A communication apparatus, comprising a processor, wherein the processor is configured to execute program code, to enable the communication apparatus to implement the method according to any one of claims 1 to 10, implement the method according to any one of claims 11 to 16, implement the method according to any one of claims 17 to 19, or implement the method according to any one of claims 20 to 24.

27. A communication system, comprising at least one of a source edge enabler server EES and a target EES, wherein the source EES is configured to implement the method according to any one of claims 17 to 19, and the target EES is configured to implement the method according to any one of claims 20 to 24.

28. The communication system according to claim 27, wherein the communication system further comprises an edge configuration server ECS, and the ECS is configured to implement the method according to any one of claims 11 to 16.

29. The communication system according to claim 27 or 28, wherein the communication system further comprises a terminal device, and the terminal device is configured to implement the method according to any one of claims 1 to 10.

30. A method, wherein the method comprises:
sending, by a terminal, second information to an edge configuration server ECS, wherein the second information indicates to select an edge enabler server EES that supports an application context relocation ACR scenario;
sending, by the ECS, EES information to the terminal, wherein the EES information indicates at least one EES that supports the ACR scenario;
determining, by the terminal, a target EES based on the EES information, wherein the target EES is an EES in the at least one EES that supports the ACR scenario; and
requesting, by the terminal, the target EES to execute ACR, so that the terminal device relocates an application context of the terminal device from a source edge application server EAS of the terminal device to a target EAS of the terminal device via the target EES.

31. The method according to claim 30, wherein the ACR scenario is a scenario in which the terminal device relocates the application context of the terminal device from the source EAS of the terminal device to the target EAS of the terminal device via the EES that supports the ACR scenario.

32. A communication system, wherein the communication system comprises:
a terminal device, configured to implement the method according to claim 1; and
a network side device, configured to communicate with the terminal device.

33. The communication system according to claim 32, wherein the network side device comprises at least one of an edge configuration server ECS and an edge enabler server EES.
